(19) Europäisches Patentamt / European Patent Office / Office européen des brevets

(11) **EP 4 641 180 B1**

(12) **EUROPEAN PATENT SPECIFICATION**

(45) Date of publication and mention
of the grant of the patent:
**06.05.2026 Bulletin 2026/19**

(21) Application number: **24172300.6**

(22) Date of filing: **24.04.2024**

(51) International Patent Classification (IPC):
***G01N 22/00*** *(2006.01)*

(52) Cooperative Patent Classification (CPC):
**G01N 22/00;** G01N 21/3581

(54) **ASYNCHRONOUS TRANSIENT SIGNAL ANALYSIS**

ASYNCHRONE ÜBERGANGSSIGNALANALYSE

ANALYSE DE SIGNAL TRANSITOIRE ASYNCHRONE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(43) Date of publication of application:
**29.10.2025 Bulletin 2025/44**

(73) Proprietor: **Vrije Universiteit Brussel
1050 Brussel (BE)**

(72) Inventors:
• **POURKAZEMI, Ali
9051 Sint-Denijs-Westrem (BE)**

• **STIENS, Johan
2820 Bonheiden (BE)**
• **THIBAUT, Kato
1600 Sint-Pieters-Leeuw (BE)**
• **AKBARIAN, Fahimeh
1050 Brussel (BE)**

(74) Representative: **Winger
Mouterij 16 bus 101
3190 Boortmeerbeek (BE)**

(56) References cited:
**EP-A1- 3 106 861      WO-A1-03/019207
US-B2- 11 085 874**

**Description**

**Field of the Invention**

The present invention relates to the field of non-destructive testing and analysis of materials, and more specifically to systems and methods for sampling and processing repetitive transient radar signals reflected on these materials.

**Background of the Invention**

The field of non-destructive testing (NDT) is critical for ensuring the integrity and safety of materials and structures across various industries. NDT methods are employed to detect, characterize, and measure defects or inconsistencies in materials without causing damage, thereby preserving their utility, and extending their service life. These methods are essential in industries such as aerospace, automotive, construction, and manufacturing, where material failure can have catastrophic consequences.

One of the challenges in the field of NDT is the accurate and efficient analysis of multilayer structures. These structures are common in many industrial applications, and their integrity is often crucial for the overall performance of the system they are part of. Traditional NDT methods, such as ultrasonic testing, radiography, and eddy current testing, have limitations in terms of resolution, depth of penetration, and the ability to provide quantitative information about the material properties.

The resolution of measurements is a concern in NDT. As industries strive for more precise and detailed inspections, the demand for higher resolution in both lateral and depth dimensions increases. For instance, improving the frequency of the testing method can enhance resolution, but this often comes with technical and commercial challenges, particularly when dealing with high-frequency signals.

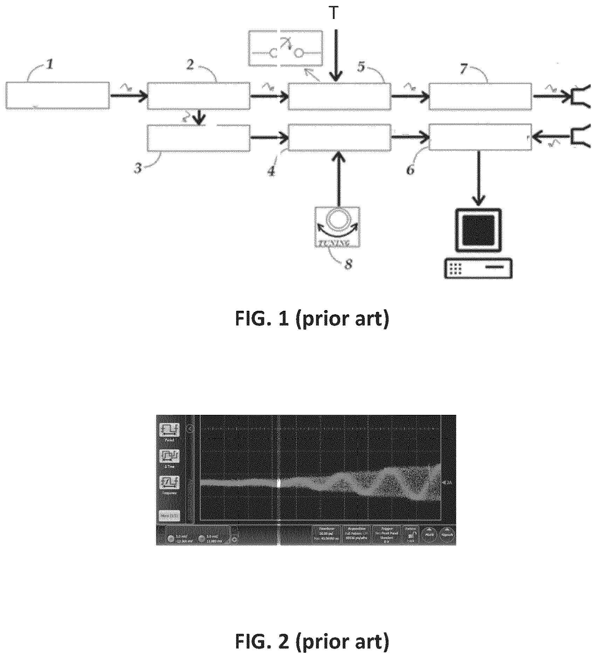

An example of a prior-art set-up of a synchronized system for non-destructive analysis which implements a transient radar is illustrated in FG. 1. A single frequence signal is generated by the generator (1), a power divider (2) splits the incoming signal in two output signals. A first signal is for transmission to the material under test and a second signal is for synchronizing the sampling of the reflected first signal. A switch (5), with as input the first signal and triggered by a trigger (T), is repetitively switched on and off for repetitively generating a transient signal, and the obtained signal is amplified (7) before being transmitted using a transmit antenna. At the receive side the signal from the receiver antenna is sampled using a single shot sampler (6) and the sampling is synchronized using the second signal which can be filtered using a filter (3), and delayed with a tunable (8) delay using a delay creator (4). In the example illustrated in FIG. 1 the sampled signal can be processed using a computer. FIG. 2 shows a transient radar sinusoidal signal sampled using the prior art synchronous system of FIG. 1. An example of a synchronous system is disclosed in EP3106861A1.

The need for synchronized signals in NDT methods can be a significant hurdle. Synchronization requires complex and expensive electronics, which can limit the practicality and scalability of these methods. This is especially true at higher frequencies, where generating synchronous transient radar signals becomes increasingly difficult.

Despite the advancements in NDT technologies, there remains a need for further innovation to address these challenges. A method that can provide high-resolution, quantitative analysis of multilayer structures in a non-contact and non-destructive manner, without the need for synchronized signals, would be a significant step forward in the field. Such a method would ideally be adaptable to a wide range of industrial materials and applications, offering a more efficient and cost-effective solution for material analysis and quality control.

**Summary of the Invention**

It is an object of embodiments of the present invention to enable non-destructive analysis of test materials with enhanced frequency range and reduced costs by operating without the need for synchronized electromagnetic signal generation. This objective is accomplished by a system for non-destructive analysis of a test material according to the invention.

In the first aspect, the present invention relates to a system for non-destructive analysis of a test material, comprising an electromagnetic signal generator configured for repetitively generating an electromagnetic wave of substantially one frequency wherein the electromagnetic wave comprises a transient part, and for emitting the electromagnetic wave using a first transmit antenna in a first channel and using a second transmit antenna in a second channel different from the first channel, a differential measurement module configured for repetitive equivalent time sampling of transient signals from a first receive antenna using a first clock signal and repetitive equivalent time sampling of transient signals from a second receive antenna using a second clock signal, wherein the first clock signal and the second clock signal are correlated, to obtain a set of reference samples from the first channel when the first receive antenna is receiving repetitive transient signals from reflection of the electromagnetic wave at a first reference material positioned in front of the first transmit antenna and to obtain data samples from the second channel when the second receive antenna is receiving repetitive transient signals from reflection of the electromagnetic wave at the test material when the test material is positioned in front of the second transmit antenna, wherein the sampling is asynchronous with the generated electromagnetic wave, a processing module configured for determining phase information from the set of reference samples of the first channel using predetermined operational data of the system and for converting the data samples into synchronous data samples comprising amplitude and phase information using the phase information of the set of reference samples of the first channel and using the predetermined operational data of the system.

It is an advantage of embodiments of the present invention that synchronous data samples can be obtained which are comprising amplitude and phase information from the samples obtained by the differential measurement module.

It is an advantage of embodiments of the present invention that repetitive transient parts are obtained from the set of reference samples and that therefore from the repetitive sampling of these repetitive transient parts phase information can be derived for the samples. Since the differential measurement module is sampling the set of reference samples and the data samples with correlated clocks, this phase information can also be used for obtaining the phase information for the data samples. It is an advantage of embodiments of the present invention that the obtained synchronous data samples of the repetitive transient signals can be used for analyzing the test material.

In embodiments, at least part of the predetermined operational data of the system may be obtained by the differential measurement module by obtaining a first set of predetermined reference samples from the first channel when the first receive antenna is receiving repetitive transient signals from reflection of the electromagnetic wave at the first reference material positioned in front of the first transmit antenna in combination with a second set of predetermined reference samples from the second channel when the second receive antenna is receiving repetitive transient signals from reflection of the electromagnetic wave at a second reference material when the second reference material is positioned in front of the second transmit antenna. It is an advantage of embodiments of the present invention that drift in one channel or time delays between channels can be compensated for using the predetermined operational data. This allows to more accurately convert the data samples into synchronous data samples comprising amplitude and phase information using the phase information of the set of reference samples of the first channel and the predetermined operational data.

In embodiments, the first reference material or the second reference material may be an ideal reflector. It is an advantage of embodiments of the present invention that a consistent and reliable reference is provided for signal analysis.

In embodiments, at least part of the predetermined operational data of the system may be obtained by the differential measurement module by obtaining a third set of predetermined reference samples obtained from the first channel when the first receive antenna is receiving repetitive transient signals from reflection of the electromagnetic wave at the first reference material positioned in front of the first transmit antenna in combination with a set of predetermined crosstalk samples obtained from the second channel when the second receive antenna is receiving repetitive transient signals from crosstalk between the second transmit antenna and the second receive antenna when no material is positioned in front of the second transmit antenna. This embodiment provides the advantage of accounting for and reducing the effects of crosstalk in the system's measurements. It is an advantage of embodiments of the present invention that timing of the transient part of the reflected electromagnetic wave in the first set of predetermined reference samples can be accurately determined in comparison with the set of predetermined crosstalk samples. This allows to more accurately convert the data samples into synchronous data samples comprising amplitude and phase information using the phase information of the set of reference samples of the first channel and the predetermined operational data.

In embodiments, the processing module may be configured for deriving, from the synchronous data samples of the repetitive transient signals from reflection of the electromagnetic wave at the test material, geometric information and/or electromagnetic properties of one or more layers of the test material. This embodiment offers the advantage of enabling the system to determine detailed characteristics of the test material's structure.

In embodiments, the electromagnetic wave may have a frequency between 0.1 GHz and 100 Thz. This embodiment provides the advantage of a wide operational frequency range, allowing for versatile applications of the system. The high frequencies are enabled because the sampling is asynchronous using a differential measurement module which does repetitive equivalent time sampling of transient signals of a reference signal and of a data signal using correlated clocks.

In embodiments, the first clock signal may be the same as the second clock signal. This embodiment offers the advantage of simplifying the system's design by using a single clock source for both sampling channels.

In the second aspect, the present invention relates to a method for non-destructive analysis of a test material, the method comprising repetitively generating an electromagnetic wave of substantially one frequency wherein the electromagnetic wave comprises a transient part, and for emitting the electromagnetic wave using a first transmit antenna in a first channel and using a second transmit antenna in a second channel different from the first channel, repetitive equivalent time sampling of transient signals from a first receive antenna using a first clock signal and repetitive equivalent time sampling of transient signals from a second receive antenna using a second clock signal wherein the first clock signal and the second clock signal are correlated, to obtain a set of reference samples from the first channel when the first receive antenna is receiving repetitive transient signals from reflection of the electromagnetic wave at a first reference material positioned in front of the first transmit antenna and to obtain data samples from the second channel when the second receive antenna is receiving repetitive transient signals from reflection of the electromagnetic wave at the test material when the test material is positioned in front of the second transmit antenna, wherein the sampling is asynchronous with the generated electromagnetic wave, processing the set of reference samples and the data samples for determining phase information from the set of reference samples of the first channel using predetermined operational data of the system and for converting the data samples into synchronous data samples comprising amplitude and phase information using the phase information of the set of reference samples of the first channel and using the predetermined operational data of the system.

In embodiments, the method may comprise a pre-operation step, wherein the pre-operation step may comprise obtaining at least part of the predetermined operational data of the system by repetitive equivalent time sampling signals from the first receive antenna using the first clock and from the second receive antenna using the second clock, to obtain a first set of predetermined reference samples from the first channel when the first receive antenna is receiving repetitive transient signals from reflection of the electromagnetic wave at the first reference material positioned in front of the first transmit antenna and to obtain a second set of predetermined reference samples from the second channel when the second receive antenna is receiving repetitive transient signals from reflection of the electromagnetic wave at a second reference material when the second reference material is positioned in front of the second transmit antenna, wherein the sampling is asynchronous with the generated electromagnetic wave, and/or wherein the calibration step may comprise obtaining at least part of the predetermined operational data of the system by repetitive equivalent time sampling signals from the first receive antenna using the first clock and by repetitive equivalent time sampling signals from the second receive antenna using the second clock, to obtain a third set of predetermined reference samples from the first channel when the first receive antenna is receiving repetitive transient signals from reflection of the electromagnetic wave at the first reference material positioned in front of the first transmit antenna and to obtain a set of predetermined crosstalk samples from the second channel when the second receive antenna is receiving repetitive transient signals from crosstalk between the second transmit antenna and the second receive antenna when no material is positioned in front of the second transmit antenna, wherein the sampling is asynchronous with the generated electromagnetic wave. It is an advantage of embodiments of the present invention that a robust pre-operation of the system is provided, ensuring accurate analysis results.

In embodiments, the method may comprise calculating envelopes of the repetitive transient signals in the obtained samples and aligning these envelopes for calibrating timing of the repetitive transient signals in the obtained samples. It is thereby an advantage of embodiments of the present invention that the temporal accuracy of the system's measurements can be improved.

In embodiments, the method may comprise removing outliers from the obtained samples. It is thereby an advantage of embodiments of the present invention that the quality of the data is improved by eliminating anomalous readings that could skew the analysis.

In embodiments, the processing may comprise deriving from the synchronous data samples of the repetitive transient signals from reflection of the electromagnetic wave at the test material geometric information and/or electromagnetic properties of one or more layers of the test material. This embodiment offers the advantage of enabling the method to extract detailed information about the internal structure of the test material.

In embodiments, the deriving may comprise deconvolution of the data samples into different contributions to the reflected part of the electromagnetic wave stemming from the reflection of the electromagnetic wave at, or the transmission through, one or more interfaces of the layer-based structure, based on a superposition model of the different contributions in the transient part of the reflected electromagnetic wave.

In the third aspect, the present invention relates to a computer program product for, when executed on a processor, non-destructive analysis of a test material, the computer program product being programmed for receiving a set of reference samples and a set of data samples from a differential measurement module which is configured for repetitive equivalent time sampling of transient signals from a first receive antenna using a first signal clock and repetitive equivalent time sampling of transient signals from a second receive antenna using a second clock signal wherein the first clock signal and the second clock signal are correlated, to obtain the set of reference samples from a first channel when the first receive antenna is receiving repetitive transient signals from reflection of a repetitively generated transient electromagnetic wave at a first reference material positioned in front of a first transmit antenna and to obtain the data samples from a second channel when the second receive antenna is receiving repetitive transient signals from reflection of the electromagnetic wave at the test material when the test material is positioned in front of the second transmit antenna, wherein the sampling is asynchronous with the generated electromagnetic wave, the computer program product furthermore being programmed for determining phase information from the set of reference samples of the first channel using predetermined operational data of the system and for converting the data samples into synchronous data samples comprising amplitude and phase information using the phase information of the set of reference samples of the first channel and using the predetermined operational data of the system.

In the fourth aspect, the present invention relates to a data carrier comprising a computer program product encoded thereon.

Particular and preferred aspects of the invention are set out in the accompanying independent and dependent claims. Features from the dependent claims may be combined with features of the independent claims and with features of other dependent claims as appropriate and not merely as explicitly set out in the claims.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.

## Brief description of the drawings

FIG. 1 shows a prior art set-up of a synchronized system for non-destructive analysis which implements a transient radar method (TRM).

FIG. 2 shows a typical transient radar signal obtained using a prior art system in synchronous mode.

FIG. 3 shows a set-up of an asynchronous signal generation and sampling system as used in embodiments of the present invention.

FIG. 4 shows a typical transient radar signal obtained using the asynchronous sampling system illustrated in FIG. 2.

FIG. 5 illustrates the principle of random equivalent time sampling, resulting in a cloud of data points.

FIG. 6 shows a schematic drawing of an exemplary system for non-destructive analysis of a test material in accordance with embodiments of the present invention.

FIG. 7 shows a flow-chart of an exemplary method for non-destructive analysis of a test material in accordance with embodiments of the present invention.

FIG. 8 shows an example of calculated envelopes for TRM data which may be obtained in a method or system in accordance with embodiments of the present invention.

FIG. 9 shows an example of drift compensation in an exemplary method or system in accordance with embodiments of the present invention.

FIG. 10 shows an example of determining phase information from a set of reference samples of the first channel using predetermined operational data of the system and for converting the data samples into synchronous data samples comprising amplitude and phase information using the phase information of the set of reference samples of the first channel and using the predetermined operational data of the system as applied in an exemplary system or method in accordance with embodiments of the present invention.

FIG. 11 shows the transient radar method and illustrates how propagation paths are reflected at interfaces of the material under test.

FIG. 12 shows a first set of predetermined reference samples and the synchronized first set of predetermined reference samples data samples obtained on the first channel using a method or system in accordance with embodiments of the present invention.

FIG. 13 shows a second set of predetermined reference samples and the synchronized second set of predetermined reference samples obtained on the second channel using a method or system in accordance with embodiments of the present invention.

FIG. 14 shows a third set of predetermined reference samples and the synchronized third set of predetermined reference samples data samples obtained on the first channel using a method or system in accordance with embodiments of the present invention.

FIG. 15 shows a set of cross-correlation samples and the synchronized set of cross-correlation samples obtained on the second channel using a method or system in accordance with embodiments of the present invention.

FIG. 16 shows a set of reference samples and the synchronized set of reference samples data samples obtained on the first channel using a method or system in accordance with embodiments of the present invention.

FIG. 17 shows a set of data samples and the synchronized set of data samples obtained on the second channel using a method or system in accordance with embodiments of the present invention.

FIG. 18 shows the unsynchronized signal, the synchronized signal without smoothing and the synchronized signal with smoothing for a reference signal in accordance with embodiments of the present invention.

FIG. 19 shows the unsynchronized signal, the synchronized signal without smoothing and the synchronized signal with smoothing for a data signal in accordance with embodiments of the present invention.

FIG. 20 shows the unsynchronized signal, the synchronized signal without smoothing and the synchronized signal with smoothing for a crosstalk signal in accordance with embodiments of the present invention.

**Detailed description of Illustrative Embodiments**

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

The terms first, second, third and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

It is to be noticed that the term "comprising", also used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be interpreted as being limited to devices consisting only of components A and B. It means that with respect to the present invention, the only relevant components of the device are A and B. The term "comprising" therefore covers the situation where only the stated features are present and the situation where these features and one or more other features are present. The word "comprising" according to the invention therefore also includes as one embodiment that no further components are present. When the word "comprising" is used to describe an embodiment in this application, it is to be understood that an alternative version of the same embodiment, wherein the term "comprising" is replaced by "consisting of", is also encompassed within the scope of the present invention.

Similarly, it is to be noticed that the term "coupled" should not be interpreted as being restricted to direct connections only. The terms "coupled" and "connected", along with their derivatives, may be used. It should be understood that these terms are not intended as synonyms for each other. Thus, the scope of the expression "a device A coupled to a device B" should not be limited to devices or systems wherein an output of device A is directly connected to an input of device B. It means that there exists a path between an output of A and an input of B which may be a path including other devices or means. "Coupled" may mean that two or more elements are either in direct physical or electrical contact, or that two or more elements are not in direct contact with each other but yet still co-operate or interact with each other.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

Furthermore, some of the embodiments are described herein as a method or combination of elements of a method that can be implemented by a processor of a computer system or by other means of carrying out the function. Thus, a processor with the necessary instructions for carrying out such a method or element of a method forms a means for carrying out the method or element of a method. Furthermore, an element described herein of an apparatus embodiment is an example of a means for carrying out the function performed by the element for the purpose of carrying out the invention.

In the description provided herein, numerous specific details are set forth. However, it is understood that embodiments of the invention may be practiced without these specific details. In other instances, well-known methods, structures and techniques have not been shown in detail in order not to obscure an understanding of this description.

The following terms are provided solely to aid in the understanding of the invention.

As used herein, and unless otherwise specified, the term "non-destructive analysis" refers to a method or system that evaluates the properties or composition of a material without causing damage or alteration to the material being tested.

As used herein, and unless otherwise specified, the term "electromagnetic signal generator" refers to a device or component that creates and outputs electromagnetic waves at a specific frequency. The electromagnetic waves produced by this generator include a transient part from no radiation to steady-state. Examples of electromagnetic signal generators include, but are not limited to, radio frequency generators, microwave oscillators, and terahertz wave generators. The material under test is sufficiently transparent to the used electromagnetic radiation. The test material may comprise different layers. The electromagnetic radiation is reflected at or transmitted through the interfaces resulting in a series of reflected or transmitted parts of the electromagnetic radiation.

As used herein, and unless otherwise specified, the term "differential measurement module" refers to a component or subsystem designed to sample the signal from a first channel and the signal from a second channel using correlated clocks. In the context of the present invention transient signals received by two receive antennas are samples. This module performs repetitive equivalent time sampling, which is a technique used to capture a high-frequency signal with a sampling rate that is smaller than the signal frequency by taking samples over multiple emission cycles of the signal at instants shifted with a timing precision smaller than the period of the emitted signal, and constructing the waveform from these samples spread of different cycles. The sampling rate, which is determined by a clock signal, may for example range between few KS/s and few hundreds of MS/s and the shifted sampling instant may for example be adjusted with a step size of less than 5 ps or even less than 0.1 ps.

The differential measurement module uses correlated clock signals for synchronization purposes, ensuring that the samples taken from different channels are temporally aligned.

As used herein, and unless otherwise specified, the term "processing module" refers to a device within a system that processes data. In the context of this system, the processing module is responsible for analyzing the sampled data to extract phase information and converting asynchronous data samples into synchronous data samples that include both amplitude and phase information. The processing module uses predetermined operational data of the system, which may include calibration data, system response characteristics, or other relevant parameters that affect the measurement. Examples of processing modules include, but are not limited to, digital signal processors (DSPs), field-programmable gate arrays (FPGAs), and software algorithms running on general-purpose computers.

As used herein, and unless otherwise specified, the term "predetermined operational data" refers to data that has been previously established or calculated before converting the data samples into synchronous data samples comprising amplitude and phase information. This data is used to calibrate the system, correct for systematic errors, or provide a reference for converting the data samples into synchronous data samples.

In embodiments of the present invention the reference material is a reflecting material. In embodiments of the present invention the reference material may for example be an ideal reflector. As used herein, and unless otherwise specified, the term "ideal reflector" refers to a hypothetical or theoretical material that perfectly reflects electromagnetic waves without any absorption or transmission. In practice, an ideal reflector serves as a reference or standard for calibration purposes, providing a known response against which test material reflections can be compared. Examples of materials that approximate the behavior of an ideal reflector include, but are not limited to, metal plates with high reflectivity and low surface roughness. Such metal plates may be used as reference material. The reference material is, however, not limited thereto. Also other materials which are non-ideal reflectors may be used as long as there is no interference between the front-side reflection on the material and the back side reflection on the material. It is sufficient that the reference material, in case of a non-ideal reflector, is electromagnetically a few times thicker than the sample under test. A reliable reflector may fulfill the following conditions: the reflected signal includes only a single propagation path, the complex permittivity of the reflector is well known. The reflector preferentially also has a sufficiently large reflectivity to obtain a good SNR. As such a metal is an excellent example.

As used herein, and unless otherwise specified, the term "crosstalk" refers to measurements of the signal that is picked up by the receive antenna from the transmit antenna in the absence of a test material, which is used to characterize and subsequently mitigate the effects of crosstalk in the system. Examples of crosstalk include, but are not limited to, electromagnetic interference between adjacent wires or traces on a printed circuit board, or between antennas in close proximity.

As used herein, and unless otherwise specified, the term "geometric information and/or electromagnetic properties" refers to the physical dimensions, shapes, and spatial characteristics of a material, as well as its electrical and magnetic behavior, such as permittivity, permeability, conductivity, and dielectric constant. These properties can be derived from the analysis of the amplitude and phase information of the reflected electromagnetic waves and can provide insights into the internal structure, composition, and quality of the material. Examples of geometric information include, but are not limited to, layer thicknesses, surface profiles, and defect locations, while examples of electromagnetic (derived) properties include, but are not limited to, dielectric permittivity, moisture content, material density, and homogeneity.

As used herein, and unless otherwise specified, the term "frequency between 0.1 GHz and 100 THz" refers to the range of electromagnetic wave frequencies that the system is capable of generating and analyzing. This range covers a broad spectrum from the lower end of the microwave frequencies (0.1 GHz) to the far-infrared or terahertz frequencies (100 THz).

As used herein, and unless otherwise specified, the term "correlated clock signals" refers to clocks which have a fixed relationship with each other in terms of frequency, and/or phase such that the clocks can operate in a synchronized matter.

As used herein, and unless otherwise specified, the term "the same clock signal" refers to a single timing reference that is used to control the sampling of signals in both the first and second channels. This implies that the first and second clock signals are not only correlated but are identical, originating from the same source, and therefore have the same frequency and phase. This ensures that the timing of the sampling in both channels is synchronized. An example of using the same clock signal for multiple channels includes, but is not limited to, a common reference oscillator providing a timing signal to multiple sampling circuits.

As used herein, and unless otherwise specified, the term "computer program product" refers to a set of computer instructions or software code that, when executed on a processor, performs a specific task or set of tasks. In this context, the computer program product is designed to receive and process data samples for non-destructive analysis of a test material, including determining phase information and converting asynchronous data samples into synchronous data samples with amplitude and phase information. Examples of computer program products include, but are not limited to, software applications, firmware, and scripts.

As used herein, and unless otherwise specified, the term "data carrier" refers to any medium that can carry, store, or transmit data. This includes physical media such as USB drives, CDs, DVDs, hard drives, and solid-state drives, as well as non-physical media such as cloud storage services or data transmission over networks. The data carrier in this context contains the encoded computer program product that, when executed, performs the non-destructive analysis of a test material as described in the claims. Examples of data carriers include, but are not limited to, a flash memory stick containing the software for the analysis system, a downloadable software package from an online repository, or a pre-installed application on a computing device.

The invention will now be described by a detailed description of several embodiments of the invention. It is clear that other embodiments of the invention can be configured according to the knowledge of persons skilled in the art without departing from the technical teaching of the invention, the invention being limited only by the terms of the appended claims.

The present invention relates to systems, methods, and computer program products for non-destructive analysis of a test material. The invention encompasses several aspects and embodiments, each designed to improve the accuracy and reliability of material analysis without causing damage to the test material.

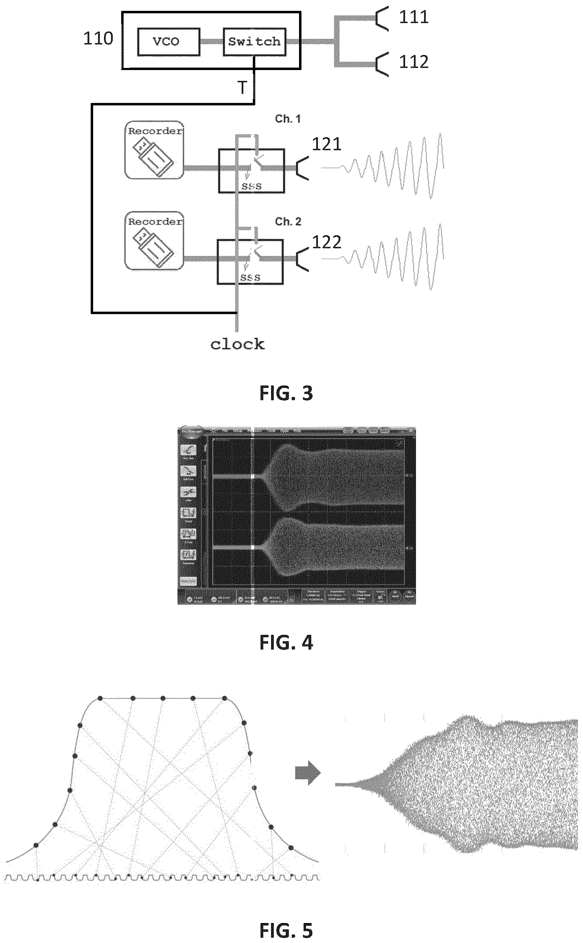

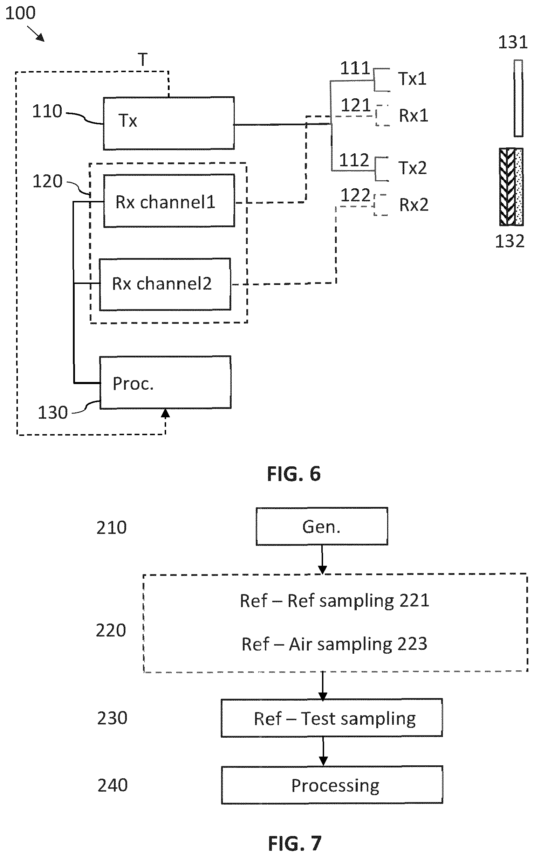

In the first aspect, the invention provides a system for non-destructive analysis of a test material. FIG. 3 shows a set-up of an asynchronous signal generation and sampling system as used in embodiments of the present invention and FIG. 6 shows a schematic drawing of an exemplary system for non-destructive analysis of a test material in accordance with embodiments of the present invention. The system (100) comprises an electromagnetic signal generator (110) configured to repetitively generate an electromagnetic wave of substantially one frequency, which includes a transient part. The electromagnetic signal generator (110) may for example be a voltage controlled oscillator (VCO) followed by a switch. By regularly turning the switch on and off a transient signal can be repetitively generated. The electromagnetic wave is emitted using a first transmit antenna (111) in a first channel and a second transmit antenna (112) in a second channel, which is different from the first channel.

A differential measurement module (120) is configured for repetitive equivalent time sampling of transient signals from a first receive antenna (121) using a first clock signal and from a second receive antenna (122) using a second clock signal. The first clock signal and the second clock signal are correlated and the sampling is asynchronous with the generated electromagnetic wave. The differential measurement module (120) is connected with the electromagnetic signal generator (110) for transferring a trigger signal (T) to the differential measurement module (120) such that the transient parts of the repetitively generated signals are sampled.

A set of reference samples is obtained from the first channel if a first reference material (131) is positioned in front of the first transmit antenna (111). A set of data samples is obtained from the second channel if the test material (132) is positioned in front of the second transmit antenna (112).

An example of the reference samples and of the data samples obtained using asynchronous sampling in accordance with the present invention is illustrated in FIG. 4. It can be seen that a cloud of data points is obtained instead of a an electromagnetic wave of substantially one frequency. The reason therefore is the asynchronously based repetitive equivalent time sampling resulting in a cloud of data points as illustrated in FIG. 5.

In order to obtain a synchronous set of data samples a system (100) according to embodiments of the present invention comprises a processing module (130) which is configured to determine phase information from the set of reference samples and to convert the data samples into synchronous data samples comprising amplitude and phase information using the phase information and using predetermined operational data of the system.

The predetermined operational data may be stored by the system. Some of the predetermined operational data may be obtained by the differential measurement module (120) when the first reference material positioned in front of the first transmit antenna (111) and when a second reference material is positioned in front of the second transmit antenna (112). Thus, a first and a second set of predetermined reference samples are obtained. These first and second set of predetermined reference samples may be stored as predetermined operational data by the system.

Additional predetermined operational data may be obtained by the differential measurement module (120) when the first reference material positioned in front of the first transmit antenna (111) and when only air is present in front of the second transmit antenna (112). Thus, a third set of predetermined reference samples and a set of predetermined crosstalk samples are obtained. As in the second channel no material is present in front of the second transmitter, crosstalk between the second transmitter and the second receiver can be determined. These third set of predetermined reference samples and set of crosstalk samples may be stored as predetermined operational data by the system. The system may account for and reduce the effects of crosstalk by obtaining crosstalk samples when no material is positioned in front of the second transmit antenna.

The reference material used may be an ideal reflector, providing a consistent and reliable reference for signal analysis.

In embodiments of the present invention a first constant distance is maintained in the first channel between the first reference material and the first TX/TR antennas.

In embodiments of the present invention a second constant distance is maintained in the second channel between the data samples and the second TX/TR antennas. When the second reference material is positioned in front of the second TX/TR antennas it is positioned at the same second distance from the second TX/RX antennas.

In embodiments of the present invention the first constant distance may be different from the second constant distance.

The processing module (130) can derive geometric information and/or electromagnetic properties of one or more layers of the test material, enabling detailed analysis of the material's structure. The electromagnetic wave used by the system may have a frequency range between 0.1 GHz and 100 THz, offering versatility in applications. Additionally, the system may simplify its design by using a single clock source for both sampling channels.

In the second aspect, the invention relates to a method for non-destructive analysis of a test material. The method includes steps for repetitively generating (210) an electromagnetic wave of substantially one frequency wherein the electromagnetic wave comprises a transient part, repetitive equivalent time sampling (230) transient signals to obtain a set of reference samples from a first channel and data samples from a second channel wherein the sampling is done using correlated clocks and wherein the sampling is asynchronous with the generated electromagnetic wave, and processing (240) the samples for converting the data samples into synchronous data samples comprising amplitude and phase information using the phase information of the set of reference samples of the first channel and using predetermined operational data of the system. The method may comprise a pre-operation step (220) for obtaining predetermined operational data of the system The method may also involve calculating envelopes of the transient signals and aligning these envelopes for calibrating the timing of the signals, as well as removing outliers from the obtained samples to enhance data quality. The processing step may include deriving geometric information and/or electromagnetic properties of the test material and may involve deconvolution of the data samples to separate different contributions to the reflected electromagnetic wave based on a superposition model.

In the third aspect, the invention provides a computer program product for non-destructive analysis of a test material when executed on a processor. The computer program product is programmed to receive a set of reference samples and a set of data samples, determine phase information, and convert the data samples into synchronous data samples.

In the fourth aspect, the invention relates to a data carrier comprising the computer program product encoded thereon. The data carrier can be any suitable medium that stores the computer program product, allowing it to be transferred to and executed on a processing system.

In an exemplary embodiment of the present invention the system is configured for first applying two pre-operation steps, followed by a measurement step of the material under test. In such a setup in total six asynchronous signals are recorded by 2 separate channels (differential setup): Channel 1 and Channel 2.

In this exemplary embodiment Channel 1 always records the reflected signal from a reference sample (e.g. an ideal reflector, for example a metal) while Channel 2 records the reflected signal in three different set-ups:

1) REF: When there is a reference material (e.g. an ideal reflector) in front of channel 2. Such a measurement results in predetermined operational data which can be used for converting data samples into synchronous data samples comprising amplitude and phase information.

2) AIR: When there is nothing in front of channel 2. This measures the cross-talk between the transmitter and receiver.

3) SAM: When there is a test material in front of channel 2. This is the actual material that gets measured. Data samples are obtained using repetitive equivalent time sampling which, in a system according to embodiments of the present invention, can be converted into synchronous data samples. It is an advantage of embodiments of the present invention that these synchronous data samples can be used to extract parameters of the test material.

In this exemplary embodiment of the present invention during each step, two paired signals are recorded in Channel 1 and Channel 2 using repetitive equivalent time sampling with two correlated clocks. The following naming convention may be used for the obtained sets of samples: channel - x - y; with channel, the channel that made the measurement; with x what is in front of the current channel; and with y what is in front of the other channel.

In this exemplary embodiment of the present invention, after a first pre-operation step a first set of predetermined reference samples (ch1-ref-ref) is obtained from the first channel and a second set of predetermined reference samples (ch2-ref-ref) is obtained from the second channel when a reflector is in front of channel 1 and a reflector is in front of channel 2.

In this exemplary embodiment of the present invention, after a second pre-operation step a third set of predetermined reference samples (ch1-ref-air) is obtained from the first channel and a set of predetermined crosstalk samples (ch2-air-ref) is obtained from the second channel when a reflector is in front of channel 1 and nothing is in front of channel 2.

In this exemplary embodiment of the present invention, during normal operation a set of reference samples is obtained from the first channel (ch1-ref-sam) and a set of data samples (ch2-sam-ref) is obtained from the second channel when a reflector is in front of channel 1 and a test material is in front of channel 2.

The pre-operation steps should not necessarily be executed in this order.

The first set of predetermined reference samples, the second set of predetermined reference samples, the third set of predetermined reference samples, and the set of predetermined crosstalk samples may be stored as the predetermined operational data of the system.

In embodiments of the present invention the sampling is done using a differential measurement module (120) configured for repetitive equivalent time sampling. The electromagnetic signal generator (110) is configured for repetitively generating an electromagnetic wave of substantially one frequency wherein the electromagnetic wave comprises a transient part and for emitting the electromagnetic wave using a first transmit antenna (111) in a first channel and using a second transmit antenna (112) in a second channel.

Thus, a sequence of transient signals is generated and for every time dependent reflected signal one or more samples (data points) are recorded by the differential measurement module using repetitive equivalent time sampling. The eventual set of data samples is obtained by taking all these measurements together. As the sampling is asynchronous with the transmitted signal and hence the starting point (t0) and frequency (f) of each of these generated signals is slightly different the eventual set of data samples is a cloud of data points.

To be able to synchronize this data, in embodiments of the present invention, two channels are used and the data acquisition of the first channel is done with a first clock and the data acquisition of the second channel is done with a second clock wherein the first clock and the second clock are correlated.

In embodiments of the present invention the processing module is configured for removing DC offset from the samples obtained by the differential measurement module. In embodiments of the present invention the processing module is configured for removing undefined data couples from the samples obtained using the differential measurement module. Undefined data couples are removed from all datasets to ensure the time array remains identical.

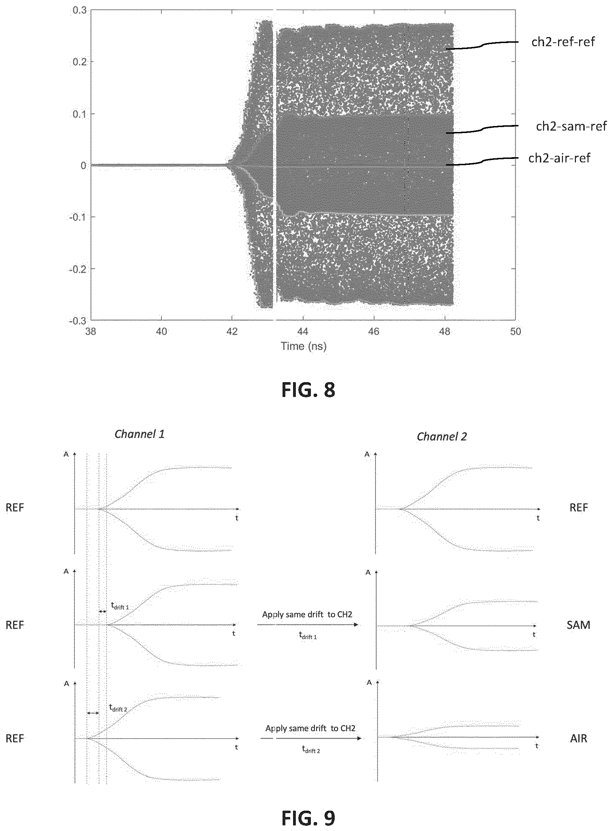

In embodiments of the present invention the processing module is configured for calculating envelopes of the repetitive transient signals in the obtained samples and aligning these envelopes for calibrating timing of the repetitive transient signals in the obtained samples. Calculating the envelope of a set of data samples involves extracting the upper and/or lower contour of the signal amplitude over time. There are several methods to calculate the envelope. The envelope may for example be calculated using peak detection or using low-pass filtering. FIG. 8 shows an example of calculated envelopes for TRM data which are obtained using an exemplary embodiment of the present invention. The envelopes are calculated for the data samples (ch2-sam-ref), the second set of predetermined reference samples (ch2-ref-ref) and the set of predetermined crosstalk samples (ch2-air-ref). In this example the total time window of sampling one transient time signal is divided in 100 time slots and the average of the 20 highest/lowest values is considered as one sample point of the upper/lower envelope. This is one implementation method of calculating the envelope. The invention is, however, not limited thereto.

In embodiments of the present invention the processing module (130) is configured for determining phase information from the set of reference samples of the first channel using the predetermined operational data of the system and for converting the data samples into synchronous data samples comprising amplitude and phase information using the phase information of the set of reference samples of the first channel and using the predetermined operational data of the system. This may be done by compensating for drift during the measurements. A drift may be obtained from channel 1 as on channel 1 always the same signal is measured. In embodiments of the present invention the drift may be obtained by comparing a first envelope from one set of reference samples to a second envelope of another set of reference samples. The drift may be calculated using a function which gradually moves the first envelope in both directions and calculates the error between both envelopes. The shift that results in the smallest error may be used for the drift between both envelopes. In an exemplary embodiment of the present invention the envelope of the first set of predetermined reference samples (ch1-ref-ref) may be taken as the reference and the envelope of the third set of predetermined reference samples (ch1-ref-air) and the set of reference samples during regular measurements (ch1-ref-sam) may be compared to calculate the drift.

When the signal that is being shifted occurs later than the first set of predetermined reference samples, then the calculated delay time is negative. When the signal occurs earlier, the calculated delay time is positive. This convention is illustrated in FIG. 9. The left column shows the envelopes of the sets of measurements on the first channel and the right column shows the envelopes of the sets of measurements on the second channel. The measurements on the first channel are used for determining the drift. This is possible because on the first channel always the same first reference material is used. The obtained drift is applied to the corresponding measurement on the second channel. This is possible because correlated clock are used for sampling the first channel and for sampling the second channel.

In the example in FIG. 9 the top row shows the envelopes of the first set of predetermined reference samples from the first channel and the second set of predetermined reference samples from the second channel.

The second row shows the envelope of the set of reference samples during a regular measurement and the envelope of the set of data samples when the test material is in front of the second channel. The drift between the first set of predetermined reference samples and the set of reference sample during the regular measurement is $t_{drift1}$. This drift is negative in this example. The same drift can be applied to the set of data samples from channel 2.

The third row shows the envelope of the third set of predetermined reference samples and the envelope of the set of predetermined crosstalk samples when nothing is in front of the second channel. The drift between the first set of predetermined reference samples and the set of predetermined crosstalk samples is $t_{drift2}$. In the example this drift is positive.

Since similar conditions were present in three successive measurements in the first channel, comparable results are obtained, including the envelopes of recorded signals. Overlapping these envelopes allows to estimate the amount of drift in each step, which must be mathematically compensated. Drift compensation can be applied to the three combinations of signals (channel 1 REF, channel 2 REF; channel 1 REF, channel 2 AIR; channel 1 REF, channel 2 SAM).

In the exemplary embodiment of the present invention the first clock and the second clock are the same. If in channel 1 a measurement is done at t=t1, then this measurement is also done in channel 2. Thus, it is known that the datapoint measured at t = t1 in channel 1 ($t1$, y1) and the datapoint measured at t = t1 in channel 2 (t1, y2) come from the same signal repetition, with the same frequency and t0.

During a pre-operation step both channels may measure the reflection of the transmitted signal on an ideal reflector. This means that, in theory, they measure the same signal, and y1 and y2 now come from the same curve. Thus, predetermined operational data may be obtained which can be used for synchronization.

The predetermined operational data may be used for calculating the frequency and t0 for each datapoint. This synchronization may then be used to synchronize the other remaining signals.

In embodiments of the present invention the processing module may be configured for compensating the time delay between first and the second channel when converting the data samples into synchronous data samples. This time delay may originate from a difference in length of cables between the two channels, or due to a difference in components, or because of a difference in position of the first reference material in the first channel and the second reference material in the second channel. This delay may be calculated from the first set of predetermined reference samples (ch1-ref-ref) and the second set of predetermined reference samples (ch2-ref-ref). This can be done with the same function as the function that is used for calculating the drift. Before applying this function, the reference samples may be scaled first because one channel may record higher samples than the other channel (e.g.) due to attenuation effects. Again the same convention may be used. A positive time delay signifies the signal on channel 2 arrived earlier than the signal on channel 1, a negative time delay signifies it arrived later.

In embodiments of the present invention a starting point $t_0$ may be defined using the predetermined operational data of the system for obtaining a set of synchronous data samples. In the exemplary embodiment of the present invention the ideal starting point $t_0$, which is the onset point of the signal, is calculated from the set of predetermined crosstalk samples (ch2-air-ref), and the second set of predetermined reference samples (ch2-ref-ref) after drift compensation. In the beginning, before the signals start to emerge, both the crosstalk signal and the reference signal are very similar. Once the illumination starts, the envelopes of the second set of predetermined reference samples starts to diverge from the envelope of the set of predetermined crosstalk samples. This point can be calculated by finding the last point where the difference between the envelopes is below a certain value.

In embodiments of the present invention the sampled signal in its general form can be written as:

$$y_1 = A_1(t_1)\sin(2\pi f_1(t_1 - t_0) \pm 2n_1\pi)$$

In embodiments of the present invention the predetermined operational data of the system may be used for determining the average frequency of the sampled signals. The average frequency of the transmitted/reflected signal may be calculated from the first set of reference samples and/or from the second set of reference samples. In embodiments of the present invention this may for example be done on the steady-state part of the obtained signal. This may for example be the last quarter section of the signal. This is, however, not strictly necessary. The frequency may also be calculated through the whole-time window. When a sample y1 is obtained at the moment t1 the signal frequency can be calculated using the following formula:

$$signal\ frequency = \frac{\sin^{-1}\left(\frac{y_1}{A_1(t_1)}\right) - 2n\pi}{2\pi t_1}$$

In the exemplary embodiment of the present invention "n" is selected such that the calculated frequency is substantially the same as the frequency of the electromagnetic wave that is generated by the electromagnetic signal generator 110. In this example the frequency of the generated electromagnetic wave is 10 GHz. In that case the following formula may be used for obtaining the value for n:

$$n = round\ (\frac{10 * last\ time\ point}{1e - 9})$$

The frequency may be calculated for each datapoint, which results in an array of frequencies. In the exemplary embodiment of the present invention the mean value of this array is calculated to obtain the average frequency. The maximum and minimum value that are present in the array may be used to calculate the uncertainty value.

When this formula is reversed to get the frequency, the period (integer number) of the datapoint $t_1$ needs to be known to obtain the frequency. Since the frequency is not yet known for each data point, n can be estimated based on the average frequency:

$$round\ (t \times f_{ave}) = n(f_{ave})$$

Since an average value of the frequency is used for the calculation of n, the calculated value of n has an uncertainty. A measure for this uncertainty can be calculated as follows:

$$uncertainty\ value = max\ [\left(n(f_{max}) - n(f_{ave})\right), (n(f_{ave}) - n(f_{min}))]$$

A range of possible n-values can be determined from the estimated n and the uncertainty value and the best n can for example be selected using a cost function.

In embodiments of the present invention the processing module 130 may be configured for removing all data points with values larger than their envelope. The indices of these data points may be saved so that in a next step the data points of the corresponding index are removed from all sets of samples to obtain clean sets of samples.

In embodiments of the present invention the processing module 130 is configured for using the cleaned sets signals and the obtained parameters for converting the data samples into synchronous data samples comprising amplitude and phase information.

This may be achieved as follows given the general equations of the signals:

$$y_1 = A_1(t_1)\sin\ (2\pi f_1(t_1 - t_0))$$

$$y_2 = A_2(t_1)\sin\ (2\pi f_2(t_d + t_1 - t_0))$$

In these equations:

- $y_1$, and $y_2$ are respectively the datapoints (amplitude) from channel 1 and channel 2 at $t=t_1$;
- A1, and A2 are the respective positive envelopes of the channel 1 and the channel 2 signal;
- $t_d$ is the time delay on channel 2. In this example the convention is that $t_d$ is positive if the signal on channel 2 is earlier, and negative if the signal is later.

In these equations $t_0$ and the frequency are unknown. In embodiments of the present invention the set of two equations and two unknowns can be solved, on the condition that the time delay is not zero.

The equations have four possible solutions:

$$1 \begin{cases} t_0 = t_1 - \dfrac{\sin^{-1}\dfrac{y_1}{A_1(t_1)} \pm 2\pi n_1}{2\pi f_1} \\ t_0 = t_1 + t_d - \dfrac{\sin^{-1}\dfrac{y_2}{A_2(t_1)} \pm 2\pi n_2}{2\pi f_1} \end{cases} \qquad 2 \begin{cases} t_0 = t_1 - \dfrac{\pi - \sin^{-1}\dfrac{y_1}{A_1(t_1)} \pm 2\pi n_1}{2\pi f_1} \\ t_0 = t_1 + t_d - \dfrac{\sin^{-1}\dfrac{y_2}{A_2(t_1)} \pm 2\pi n_2}{2\pi f_1} \end{cases}$$

$$3 \begin{cases} t_0 = t_1 - \dfrac{\sin^{-1}\dfrac{y_1}{A_1(t_1)} \pm 2\pi n_1}{2\pi f_1} \\ t_0 = t_1 + t_d - \dfrac{\pi - \sin^{-1}\dfrac{y_2}{A_2(t_1)} \pm 2\pi n_2}{2\pi f_1} \end{cases} \qquad 4 \begin{cases} t_0 = t_1 - \dfrac{\pi - \sin^{-1}\dfrac{y_1}{A_1(t_1)} \pm 2\pi n_1}{2\pi f_1} \\ t_0 = t_1 + t_d - \dfrac{\pi - \sin^{-1}\dfrac{y_2}{A_2(t_1)} \pm 2\pi n_2}{2\pi f_1} \end{cases}$$

$$1 \Rightarrow t_1 - \frac{\sin^{-1}\dfrac{y_1}{A_1(t_1)} \pm 2\pi n_1}{2\pi f_1} = t_1 + t_d - \frac{\sin^{-1}\dfrac{y_2}{A_2(t_1)} \pm 2\pi n_2}{2\pi f_1}$$

$$\Leftrightarrow 2\pi f_1 t_d = \sin^{-1}\frac{y_2}{A_2(t_1)} \pm 2\pi n_2 - \sin^{-1}\frac{y_1}{A_1(t_1)} \mp 2\pi n_1$$

$$\Leftrightarrow f_1 = \frac{\sin^{-1}\dfrac{y_2}{A_2(t_1)} \pm 2\pi n_2 - \sin^{-1}\dfrac{y_1}{A_1(t_1)} \mp 2\pi n_1}{2\pi t_d}$$

$$\Leftrightarrow f_1 = \frac{\sin^{-1}\dfrac{y_2}{A_2(t_1)} - \sin^{-1}\dfrac{y_1}{A_1(t_1)} \pm 2\pi(n_2 - n_1)}{2\pi t_d}$$

$$2 \Rightarrow t_1 - \frac{\pi - \sin^{-1}\dfrac{y_1}{A_1(t_1)} \pm 2\pi n_1}{2\pi f_1} = t_1 + t_d - \frac{\sin^{-1}\dfrac{y_2}{A_2(t_1)} \pm 2\pi n_2}{2\pi f_1}$$

$$\Leftrightarrow 2\pi f_1 t_d = \sin^{-1}\frac{y_2}{A_2(t_1)} \pm 2\pi n_2 - \pi + \sin^{-1}\frac{y_1}{A_1(t_1)} \mp 2\pi n_1$$

$$\Leftrightarrow f_1 = \frac{\sin^{-1}\dfrac{y_2}{A_2(t_1)} + \sin^{-1}\dfrac{y_1}{A_1(t_1)} \pm 2\pi(n_2 - n_1) - \pi}{2\pi t_d}$$

$$3 \Rightarrow t_1 - \frac{\sin^{-1}\dfrac{y_1}{A_1(t_1)} \pm 2\pi n_1}{2\pi f_1} = t_1 + t_d - \frac{\pi - \sin^{-1}\dfrac{y_2}{A_2(t_1)} \pm 2\pi n_2}{2\pi f_1}$$

$$\Leftrightarrow 2\pi f_1 t_d = \pi - \sin^{-1}\frac{y_2}{A_2(t_1)} \pm 2\pi n_2 - \sin^{-1}\frac{y_1}{A_1(t_1)} \mp 2\pi n_1$$

$$\Leftrightarrow f_1 = \frac{\pi - \sin^{-1}\dfrac{y_1}{A_1(t_1)} - \sin^{-1}\dfrac{y_2}{A_2(t_1)} \pm 2\pi(n_2 - n_1)}{2\pi t_d}$$

$$4 \Rightarrow t_1 - \frac{\pi - \sin^{-1}\dfrac{y_1}{A_1(t_1)} \pm 2\pi n_1}{2\pi f_1} = t_1 + t_d - \frac{\pi - \sin^{-1}\dfrac{y_2}{A_2(t_1)} \pm 2\pi n_2}{2\pi f_1}$$

$$\Leftrightarrow 2\pi f_1 t_d = \pi - \sin^{-1}\frac{y_2}{A_2(t_1)} \pm 2\pi n_2 - \pi + \sin^{-1}\frac{y_1}{A_1(t_1)} \mp 2\pi n_1$$

$$\Leftrightarrow f_1 = \frac{\sin^{-1}\dfrac{y_1}{A_1(t_1)} - \sin^{-1}\dfrac{y_2}{A_2(t_1)} \pm 2\pi(n_2 - n_1)}{2\pi t_d}$$

$$1\begin{cases} f_1 = \dfrac{\sin^{-1}\frac{y_2}{A_2(t_1)} - \sin^{-1}\frac{y_1}{A_1(t_1)} \pm 2\pi(n_2 - n_1)}{2\pi t_d} \\ t_0 = t_1 - \dfrac{\sin^{-1}\frac{y_1}{A_1(t_1)} \pm 2\pi n_1}{2\pi f_1} \end{cases} \quad 2\begin{cases} f_1 = \dfrac{\sin^{-1}\frac{y_2}{A_2(t_1)} + \sin^{-1}\frac{y_1}{A_1(t_1)} \pm 2\pi(n_2 - n_1) - \pi}{2\pi t_d} \\ t_0 = t_1 - \dfrac{\pi - \sin^{-1}\frac{y_1}{A_1(t_1)} \pm 2\pi n_1}{2\pi f_1} \end{cases}$$

$$3\begin{cases} f_1 = \dfrac{\sin^{-1}\frac{y_1}{A_1(t_1)} - \sin^{-1}\frac{y_2}{A_2(t_1)} \pm 2\pi(n_2 - n_1)}{2\pi t_d} \\ t_0 = t_1 - \dfrac{\sin^{-1}\frac{y_1}{A_1(t_1)} \pm 2\pi n_1}{2\pi f_1} \end{cases} \quad 4\begin{cases} f_1 = \dfrac{\pi - \sin^{-1}\frac{y_1}{A_1(t_1)} - \sin^{-1}\frac{y_2}{A_2(t_1)} \pm 2\pi(n_2 - n_1)}{2\pi t_d} \\ t_0 = t_1 - \dfrac{\pi - \sin^{-1}\frac{y_1}{A_1(t_1)} \pm 2\pi n_1}{2\pi f_1} \end{cases}$$

In the exemplary embodiment of the present invention 4 possible solutions are obtained for $f_1$ and $t_0$ based on these formulas. Due to the uncertainty on n, all possibilities need to be considered, both for $n_1$ and $n_2$ and all the combinations between $n_1$ and $n_2$ (hence the squared value). In total this yield the following number of possibilities:

$$Number\ of\ possibilities\ =\ ((uncertainty\ value * 2) + 1)^2 * 4$$

The processing module may be configured for executing a cost function that compares the calculated $t_0$ and $f_1$ to the ideal $t_0$ and the average frequency may be used to determine the best set of n's for each datapoint:

$$Cost\ function\ =\ \left((t_0 - t_{0_{ideal}})/t_{0_{ideal}}\right)^2 + ((frequency - f_{ave})/f_{ave})^2$$

This step is the most resource and time intensive of the algorithm, due to the many possible combinations and calculations.

The processing module (130) may be configured for, after calculation of the frequency and $t_0$ of the entire dataset, converting the difference between $t_0$ and the ideal $t_0$ to a phase shift for each datapoint n. Each datapoint can then be recalculated by the general formula, using the frequency and phase shift:

$$\begin{cases} \phi_n = 2\pi f_n\big(t_{0,ideal} - t_{0,n}\big) \\ y_{1,n,new} = A_\perp(t_n)\sin(2\pi f_n\big(t_n - t_{0,n} - \phi_n\big)) \end{cases}$$

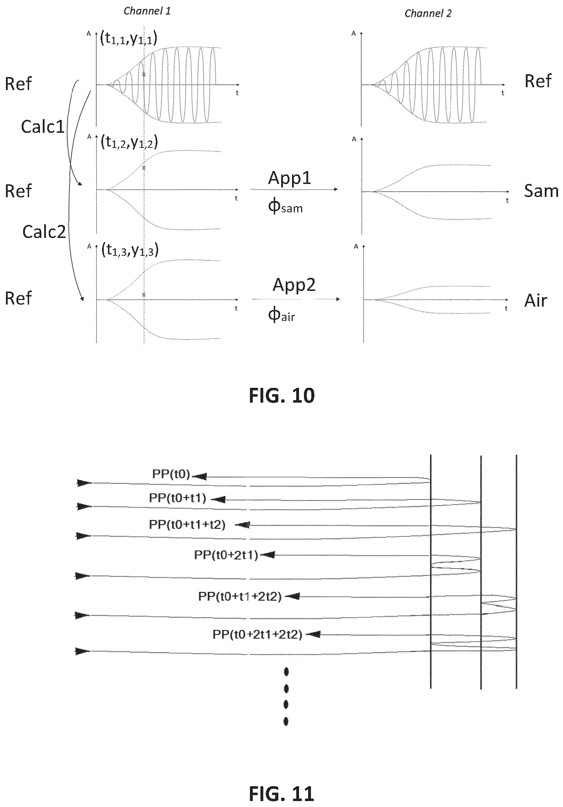

In the exemplary embodiment of the present invention determining phase information from the set of reference samples of the first channel using predetermined operational data of the system converting the data samples into synchronous data samples comprising amplitude and phase information using the phase information of the set of reference samples of the first channel and using the predetermined operational data of the system, as illustrated in FIG. 10, is further achieved by calculating (Calc1) the phase of the set of reference samples (ch1-ref-sam) during regular measurements when also measuring the test material on the second channel, and by calculating (Calc2) the phase of the third set of predetermined reference samples (ch1-ref-air). For the set of reference samples (ch1-ref-sam) during regular measurements this may be done by an iterative algorithm that finds the best phase $\phi_{sam}$ for which the error between each datapoint of abovementioned signals (y1,1 and y1,2) is minimal. For the third set of predetermined reference samples (ch1-ref-sam) this may be done by an iterative algorithm that finds the best phase $\phi_{air}$ for which the error between each datapoint of abovementioned signals (y1,1 and y1,3) is minimal.

The phase $\phi_{sam}$ is then applied (App1) to the set of data samples (ch2-sam-ref) to obtain the synchronous data samples. The phase $\phi_{air}$ is applied to the set of predetermined crosstalk samples (ch2-air-ref) to obtain synchronous crosstalk samples. This is also illustrated in FIG. 10.

In the exemplary embodiment of the present invention now that an estimated phase is obtained for each datapoint, all signals can be synchronized, based on the formula:

$$y(t) = A(t) * \sin(2\pi f(t - t_0) - \phi(t))$$

FIG. 11 shows the transient radar method and illustrates how propagation paths are reflected at interfaces of the material under test. In embodiments of the present invention the processing module (130) is configured for deriving, from the synchronous data samples of the repetitive transient signals from reflection of the electromagnetic wave at the test material, geometric information and/or electromagnetic properties of one or more layers of the test material. This may for example be achieved using an algorithm as disclosed in EP3311147A1.

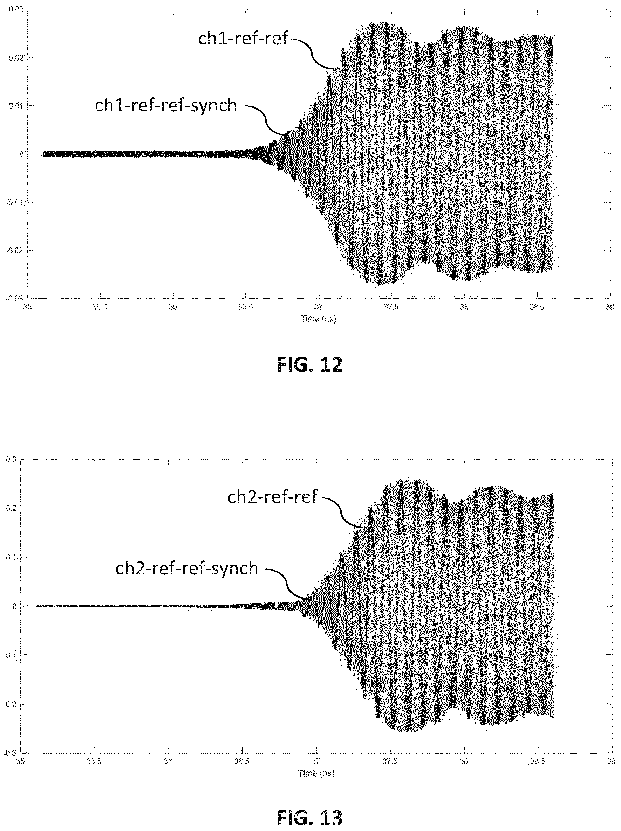

FIG. 12 shows a cloud of a first set of predetermined reference samples (ch1-ref-ref) obtained using the asynchronous random equivalent time sampling on the first channel, and the resulting synchronous first set of predetermined reference samples (ch1-ref-ref-synch) obtained using a method or system in accordance with embodiments of the present invention.

FIG. 13 shows a cloud of a second set of predetermined reference samples (ch2-ref-ref) obtained using the asynchronous random equivalent time sampling on the second channel, and the resulting synchronous second set of predetermined reference samples (ch2-ref-ref-synch) obtained using a method or system in accordance with embodiments of the present invention.

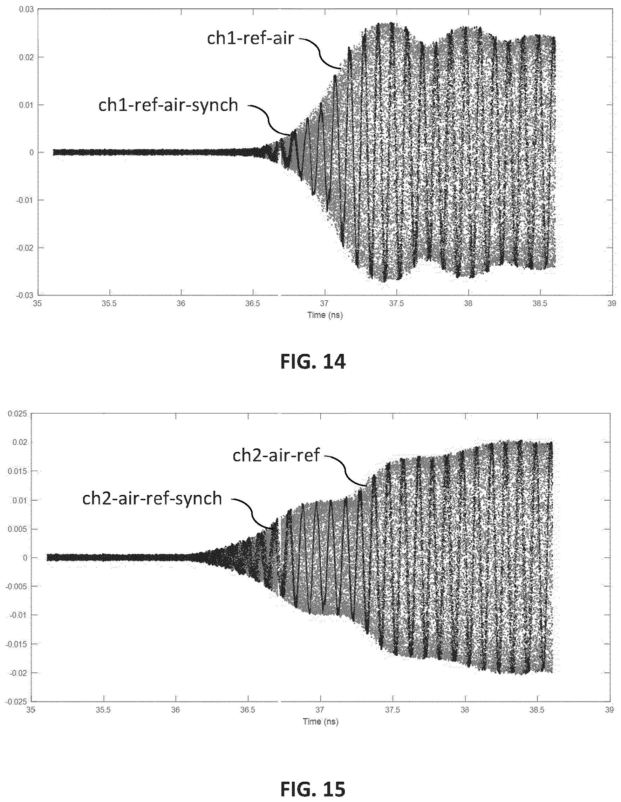

FIG. 14 shows a cloud of a third set of predetermined reference samples (ch1-ref-air) obtained using the asynchronous random equivalent time sampling on the first channel, and the resulting synchronous third set of predetermined reference samples (ch1-ref-air-synch) obtained using a method or system in accordance with embodiments of the present invention.

FIG. 15 shows a cloud of a set of crosstalk samples (ch2-air-ref) obtained using the asynchronous random equivalent time sampling on the second channel, and the resulting synchronous set of crosstalk samples (ch2-air-ref-synch) obtained using a method or system in accordance with embodiments of the present invention.

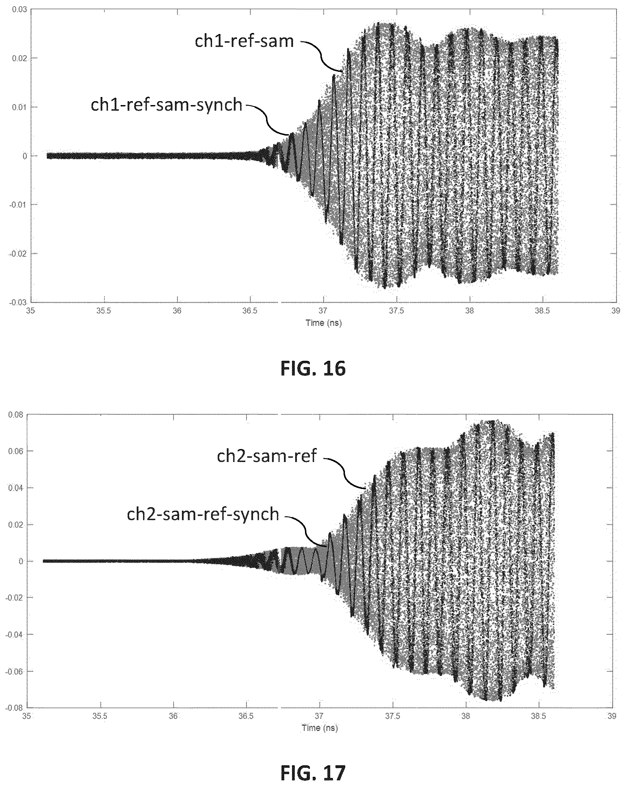

FIG. 16 shows a set of reference samples (ch1-ref-sam) obtained using the asynchronous random equivalent time sampling on the first channel, and the resulting synchronous set of reference samples (ch1-ref-sam-synch) obtained using a method or system in accordance with embodiments of the present invention.

FIG. 17 shows a cloud of a set of data samples (ch2-sam-ref) obtained using the asynchronous random equivalent time sampling on the second channel, and the resulting synchronous set of data samples (ch2-sam-ref-synch) obtained using a method or system in accordance with embodiments of the present invention.

In embodiments of the present invention smoothing is applied on the synchronous sets of samples. Smoothing may for example be applied on the synchronous data samples for deriving from the smoothed synchronous data samples geometric information and/or electromagnetic properties of one or more layers of the test material.

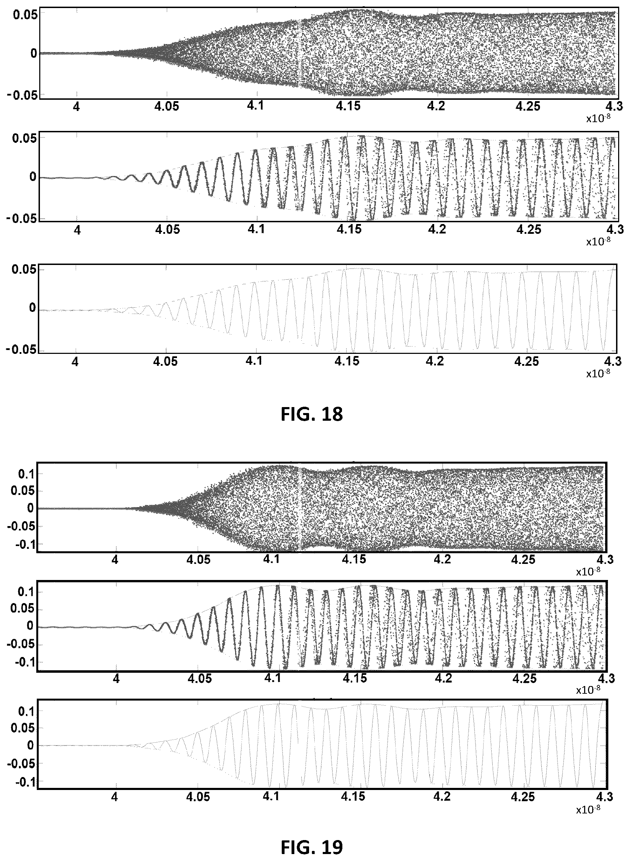

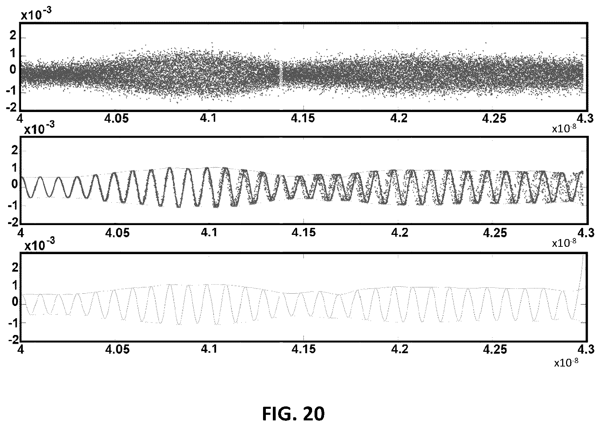

The smoothing algorithm may be applied by the processing module to reduce noise and improve the data quality. The results of the conversion step wherein the synchronous sets of samples are obtained and the smoothing are shown in FIG. 18, FIG. 19, and FIG. 20 for a reference signal (obtained from reflection on a reference material), a data signal (obtained from reflection on a test material), and a crosstalk signal (obtained when only air is in front of the channel) respectively. The test material in this experiment is PVC with a thickness of 5 cm. In each of the figures the top graph shows the unsynchronized signal, the middle graph shows the synchronized signal without smoothing and the bottom graph shows the synchronized signal with smoothing.

It is to be understood that although preferred embodiments, specific constructions and configurations, as well as materials, have been discussed herein for devices according to the present invention, various changes or modifications in form and detail may be made without departing from the scope of this invention. For example, any formulas given above are merely representative of procedures that may be used. Functionality may be added or deleted from the block diagrams and operations may be interchanged among functional blocks. Steps may be added or deleted to methods described within the scope of the present invention.

**Claims**

1. A system (100) for non-destructive analysis of a test material, comprising:

   - an electromagnetic signal generator (110) configured for repetitively generating an electromagnetic wave of substantially one frequency wherein the electromagnetic wave comprises a transient part, and for emitting the electromagnetic wave using a first transmit antenna (111) in a first channel and using a second transmit antenna (112) in a second channel different from the fist channel,
   - a differential measurement module (120) configured for repetitive equivalent time sampling of transient signals from a first receive antenna (121) using a first clock signal and repetitive equivalent time sampling of transient signals from a second receive antenna (122) using a second clock signal, wherein the first clock signal and the second clock signal are correlated,
   - to obtain a set of reference samples from the first channel when the first receive antenna (121) is receiving repetitive transient signals from reflection of the electromagnetic wave at a first reference material positioned in front of the first transmit antenna (111) and
   - to obtain data samples from the second channel when the second receive antenna (122) is receiving repetitive transient signals from reflection of the electromagnetic wave at the test material when the test material is positioned in front of the second transmit antenna (112), wherein the sampling is asynchronous with the generated electromagnetic wave,

- a processing module (130) configured for determining phase information from the set of reference samples of the first channel using predetermined operational data of the system and for converting the data samples into synchronous data samples comprising amplitude and phase information using the phase information of the set of reference samples of the first channel and using the predetermined operational data of the system.

2. A system (100) according to claim 1, wherein at least part of the predetermined operational data of the system is obtained by the differential measurement module (120) by obtaining a first set of predetermined reference samples from the first channel when the first receive antenna (121) is receiving repetitive transient signals from reflection of the electromagnetic wave at the first reference material positioned in front of the first transmit antenna (111) in combination with a second set of predetermined reference samples from the second channel when the second receive antenna (122) is receiving repetitive transient signals from reflection of the electromagnetic wave at a second reference material when the second reference material is positioned in front of the second transmit antenna (112).

3. A system (100) according to any of the previous claims wherein the first reference material or the second reference material is an ideal reflector.

4. A system (100) according to any of the previous claims, wherein at least part of the predetermined operational data of the system is obtained by the differential measurement module (120) by obtaining a third set of predetermined reference samples from the first channel when the first receive antenna (121) is receiving repetitive transient signals from reflection of the electromagnetic wave at the first reference material positioned in front of the first transmit antenna (111) in combination with a set of predetermined crosstalk samples from the second channel when the second receive antenna (122) is receiving repetitive transient signals from crosstalk between the second transmit antenna (112) and the second receive antenna (122) when no material is positioned in front of the second transmit antenna (112).

5. A system (100) according to any of the previous claims wherein the processing module (130) is configured for deriving, from the synchronous data samples of the repetitive transient signals from reflection of the electromagnetic wave at the test material, geometric information and/or electromagnetic properties of one or more layers of the test material.

6. A system (100) according to any of the previous claims wherein the electromagnetic wave has a frequency between 0.1 GHz and 100 Thz.

7. A system (100) according to any of the previous claims wherein the first clock signal is the same as the second clock signal.

8. A method (200) for non-destructive analysis of a test material, the method (200) comprising:

- repetitively generating (210) an electromagnetic wave of substantially one frequency wherein the electromagnetic wave comprises a transient part, and for emitting the electromagnetic wave using a first transmit antenna (111) in a first channel and using a second transmit antenna (112) in a second channel different from the fist channel,
- repetitive equivalent time sampling (230) of transient signals from a first receive antenna (121) using a first clock signal and repetitive equivalent time sampling of transient signals from a second receive antenna (122) using a second clock signal wherein the first clock signal and the second clock signal are correlated, to obtain a set of reference samples from the first channel when the first receive antenna (121) is receiving repetitive transient signals from reflection of the electromagnetic wave at a first reference material positioned in front of the first transmit antenna (111) and to obtain data samples from the second channel when the second receive antenna (122) is receiving repetitive transient signals from reflection of the electromagnetic wave at the test material when the test material is positioned in front of the second transmit antenna (112), wherein the sampling is asynchronous with the generated electromagnetic wave,
- processing (240) the set of reference samples and the data samples for determining phase information from the set of reference samples of the first channel using predetermined operational data of the system and for converting the data samples into synchronous data samples comprising amplitude and phase information using the phase information of the set of reference samples of the first channel and using the predetermined operational data of the system.

9. A method (200) according to claim 8, the method comprising a pre-operation step (220), wherein the pre-operation step comprises:

- obtaining at least part of the predetermined operational data of the system by repetitive equivalent time sampling (221) signals from the first receive antenna (121) using the first clock and from the second receive antenna (122) using the second clock, to obtain a first set of predetermined reference samples from the first channel when the first receive antenna (121) is receiving repetitive transient signals from reflection of the electromagnetic wave at the first reference material positioned in front of the first transmit antenna (111) and to obtain a second set of predetermined reference samples from the second channel when the second receive antenna (122) is receiving repetitive transient signals from reflection of the electromagnetic wave at a second reference material when the second reference material is positioned in front of the second transmit antenna (112), wherein the sampling is asynchronous with the generated electromagnetic wave,

and/or wherein the calibration step comprises:

- obtaining at least part of the predetermined operational data of the system by repetitive equivalent time sampling (223) signals from the first receive antenna (121) using the first clock and by repetitive equivalent time sampling signals from the second receive antenna (122) using the second clock, to obtain a third set of predetermined reference samples from the first channel when the first receive antenna (121) is receiving repetitive transient signals from reflection of the electromagnetic wave at the first reference material positioned in front of the first transmit antenna (111) and to obtain a set of predetermined crosstalk samples from the second channel when the second receive antenna (122) is receiving repetitive transient signals from crosstalk between the second transmit antenna (112) and the second receive antenna (122) when no material is positioned in front of the second transmit antenna (112), wherein the sampling is asynchronous with the generated electromagnetic wave.

10. A method (200) according to claim 9 wherein the processing step (240) comprises calculating envelopes of the repetitive transient signals in the obtained samples and aligning these envelopes for calibrating timing of the repetitive transient signals in the obtained samples.

11. A method (200) any of the claims 8 to 10 wherein the processing step (240) comprises removing outliers from the obtained samples.

12. A method (200) according to any of the claims 8 or 11 wherein the processing (240) comprises deriving from the synchronous data samples of the repetitive transient signals from reflection of the electromagnetic wave at the test material geometric information and/or electromagnetic properties of one or more layers of the test material.

13. A method (200) according to claim 12 wherein the deriving comprises deconvolution of the data samples into different contributions to the reflected part of the electromagnetic wave stemming from the reflection of the electromagnetic wave at, or the transmission through, one or more interfaces of the layer-based structure, based on a superposition model of the different contributions in the transient part of the reflected electromagnetic wave.

14. A computer program product for, when executed on a processor, non-destructive analysis of a test material, the computer program product being programmed for

- receiving a set of reference samples and a set of data samples from a differential measurement module which is configured for repetitive equivalent time sampling of transient signals from a first receive antenna (121) using a first signal clock and repetitive equivalent time sampling of transient signals from a second receive antenna (122) using a second clock signal wherein the first clock signal and the second clock signal are correlated, to obtain the set of reference samples from a first channel when the first receive antenna (121) is receiving repetitive transient signals from reflection of a repetitively generated transient electromagnetic wave at a first reference material positioned in front of a first transmit antenna (111) and to obtain the data samples from a second channel when the second receive antenna (122) is receiving repetitive transient signals from reflection of the electromagnetic wave at the test material when the test material is positioned in front of the second transmit antenna (112), wherein the sampling is asynchronous with the generated electromagnetic wave,
- the computer program product furthermore being programmed for determining phase information from the set of reference samples of the first channel using predetermined operational data of the system and for converting the data samples into synchronous data samples comprising amplitude and phase information using the phase information of the set of reference samples of the first channel and using the predetermined operational data of the system.

15. A data carrier comprising a computer program product according to claim 14 encoded thereon.

## EP 4 641 180 B1

**Patentansprüche**

1. Ein System (100) zur zerstörungsfreien Analyse eines Prüfmaterials, umfassend:

   - einen elektromagnetischen Signalgenerator (110), der so konfiguriert ist, dass er wiederholt eine elektromagnetische Welle mit im Wesentlichen einer Frequenz erzeugt, wobei die elektromagnetische Welle einen transienten Anteil aufweist, und dass er die elektromagnetische Welle unter Verwendung einer ersten Sendeantenne (111) in einem ersten Kanal und unter Verwendung einer zweiten Sendeantenne (112) in einem zweiten, vom ersten Kanal verschiedenen Kanal aussendet,
   - ein Differenzmessmodul (120), das für die wiederholte äquivalente Zeitabtastung von transienten Signalen von einer ersten Empfangsantenne (121) unter Verwendung eines ersten Taktsignals und für die wiederholte äquivalente Zeitabtastung von transienten Signalen von einer zweiten Empfangsantenne (122) unter Verwendung eines zweiten Taktsignals konfiguriert ist, wobei das erste Taktsignal und das zweite Taktsignal korreliert sind,
   - um einen Satz von Referenzabtastwerten aus dem ersten Kanal zu erhalten, wenn die erste Empfangsantenne (121) wiederholte transiente Signale aus der Reflexion der elektromagnetischen Welle an einem ersten Referenzmaterial empfängt, das vor der ersten Sendeantenne (111) positioniert ist, und
   - um Datenabtastwerten aus dem zweiten Kanal zu erhalten, wenn die zweite Empfangsantenne (122) wiederholte transiente Signale aus der Reflexion der elektromagnetischen Welle am Prüfmaterial empfängt, wenn sich das Prüfmaterial vor der zweiten Sendeantenne (112) positioniert ist, wobei die Abtastung asynchron zur erzeugten elektromagnetischen Welle erfolgt,
   - ein Verarbeitungsmodul (130), das so konfiguriert ist, dass es Phaseninformationen aus dem Satz von Referenzabtastwerten des ersten Kanals unter Verwendung vorbestimmter Betriebsdaten des Systems ermittelt, und es die Datenabtastwerte unter Verwendung der Phaseninformationen des Satzes von Referenzabtastwerten des ersten Kanals und unter Verwendung der vorbestimmten Betriebsdaten des Systems in synchrone Datenabtastwerte umwandelt, die Amplituden- und Phaseninformationen enthalten.

2. Ein System (100) nach Anspruch 1, wobei mindestens ein Teil der vorbestimmten Betriebsdaten des Systems durch das Differenzmessmodul (120) erhalten wird, indem ein erster Satz vorbestimmter Referenzabtastwerte aus dem ersten Kanal erhalten wird, wenn die erste Empfangsantenne (121) wiederholte transiente Signale aus der Reflexion der elektromagnetischen Welle an dem ersten Referenzmaterial empfängt, das vor der ersten Sendeantenne (111) positioniert ist, in Kombination mit einem zweiten Satz vorbestimmter Referenzabtastwerte aus dem zweiten Kanal, wenn die zweite Empfangsantenne (122) wiederholte transiente Signale aus der Reflexion der elektromagnetischen Welle an einem zweiten Referenzmaterial empfängt, wenn sich das zweite Referenzmaterial vor der zweiten Sendeantenne (112) positioniert ist.

3. Ein System (100) nach einem der vorstehenden Ansprüche, wobei das erste Referenzmaterial oder das zweite Referenzmaterial ein idealer Reflektor ist.

4. Ein System (100) nach einem der vorstehenden Ansprüche, wobei mindestens ein Teil der vorbestimmten Betriebsdaten des Systems durch das Differenzmessmodul (120) erhalten wird, indem ein dritter Satz vorbestimmter Referenzabtastwerte aus dem ersten Kanal erhalten wird, wenn die erste Empfangsantenne (121) wiederholte transiente Signale aus der Reflexion der elektromagnetischen Welle an dem ersten Referenzmaterial empfängt, das vor der ersten Sendeantenne (111) positioniert ist, in Kombination mit einem Satz vorbestimmter Übersprechabtastwerte aus dem zweiten Kanal, wenn die zweite Empfangsantenne (122) wiederholte transiente Signale aus dem Übersprechen zwischen der zweiten Sendeantenne (112) und der zweiten Empfangsantenne (122) empfängt, wenn sich kein Material vor der zweiten Sendeantenne (112) positioniert ist.

5. Ein System (100) nach einem der vorstehenden Ansprüche, wobei das Verarbeitungsmodul (130) so konfiguriert ist, dass es, aus den synchronen Datenabtastwerten der wiederholten transienten Signale aus der Reflexion der elektromagnetischen Welle am Prüfmaterial, geometrische Informationen und/oder elektromagnetische Eigenschaften einer oder mehrerer Schichten des Prüfmaterials ableitet.

6. Ein System (100) nach einem der vorstehenden Ansprüche, wobei die elektromagnetische Welle eine Frequenz zwischen 0,1 GHz und 100 Thz aufweist.

7. Ein System (100) nach einem der vorstehenden Ansprüche, wobei das erste Taktsignal dasselbe ist wie das zweite Taktsignal.

8. Ein Verfahren (200) zur zerstörungsfreien Analyse eines Prüfmaterials, wobei das Verfahren (200) umfasst:

   - wiederholtes Erzeugen (210) einer elektromagnetischen Welle mit im Wesentlichen einer Frequenz, wobei die elektromagnetische Welle einen transienten Anteil aufweist, und Aussenden der elektromagnetischen Welle unter Verwendung einer ersten Sendeantenne (111) in einem ersten Kanal und unter Verwendung einer zweiten Sendeantenne (112) in einem zweiten, vom ersten Kanal verschiedenen Kanal,
   - wiederholtes äquivalente Zeitabtasten (230) von transienten Signalen von einer ersten Empfangsantenne (121) unter Verwendung eines ersten Taktsignals und wiederholte äquivalente Zeitabtastung von transienten Signalen von einer zweiten Empfangsantenne (122) unter Verwendung eines zweiten Taktsignals, wobei das erste und das zweite Taktsignal korreliert sind, um einen Satz von Referenzabtastwerten vom ersten Kanal zu erhalten, wenn die erste Empfangsantenne (121) wiederholte transiente Signale aus der Reflexion der elektromagnetischen Welle an einem ersten Referenzmaterial empfängt, das vor der ersten Sendeantenne (111) positioniert ist, und um Datenabtastwerte vom zweiten Kanal zu erhalten, wenn die zweite Empfangsantenne (122) wiederholte transiente Signale aus der Reflexion der elektromagnetischen Welle am Prüfmaterial empfängt, wenn sich das Prüfmaterial vor der zweiten Sendeantenne (112) positioniert ist, wobei die Abtastung asynchron zur erzeugten elektromagnetischen Welle erfolgt,
   - Verarbeiten (240) des Satzes von Referenzabtastwerten und der Datenabtastwerten zur Bestimmung von Phaseninformationen aus dem Satz von Referenzabtastwerten des ersten Kanals unter Verwendung vorbestimmter Betriebsdaten des Systems und zur Umwandlung der Datenabtastwerte in synchrone Datenabtastwerte, die Amplituden- und Phaseninformationen enthalten, unter Verwendung der Phaseninformationen des Satzes von Referenzabtastwerten des ersten Kanals und unter Verwendung der vorbestimmten Betriebsdaten des Systems.

9. Ein Verfahren (200) nach Anspruch 8, wobei das Verfahren einen Voroperationsschritt (220) umfasst, wobei der Voroperationsschritt umfasst:

   - Erhalten mindestens eines Teils der vorbestimmten Betriebsdaten des Systems durch wiederholte äquivalente Zeitabtastung (221) von Signalen von der ersten Empfangsantenne (121) unter Verwendung des ersten Takts und von der zweiten Empfangsantenne (122) unter Verwendung des zweiten Takts, um einen ersten Satz vorbestimmter Referenzabtastwerte vom ersten Kanal zu erhalten, wenn die erste Empfangsantenne (121) wiederholte transiente Signale aus der Reflexion der elektromagnetischen Welle an dem ersten Referenzmaterial empfängt, das vor der ersten Sendeantenne (111) positioniert ist, und um einen zweiten Satz vorbestimmter Referenzabtastwerte vom zweiten Kanal zu erhalten, wenn die zweite Empfangsantenne (122) wiederholte transiente Signale aus der Reflexion der elektromagnetischen Welle an einem zweiten Referenzmaterial empfängt, wenn sich das zweite Referenzmaterial vor der zweiten Sendeantenne (112) positioniert ist, wobei die Abtastung asynchron zur erzeugten elektromagnetischen Welle erfolgt,

   und/oder wobei der Kalibrierungsschritt umfasst:

   - Erhalten mindestens eines Teils der vorbestimmten Betriebsdaten des Systems durch wiederholte äquivalente Zeitabtastung (223) von Signalen von der ersten Empfangsantenne (121) unter Verwendung des ersten Takts und durch wiederholte äquivalente Zeitabtastung von Signalen von der zweiten Empfangsantenne (122) unter Verwendung des zweiten Takts, um einen dritten Satz vorbestimmter Referenzabtastwerte vom ersten Kanal zu erhalten, wenn die erste Empfangsantenne (121) wiederholte transiente Signale aus der Reflexion der elektromagnetischen Welle an dem ersten Referenzmaterial empfängt, das vor der ersten Sendeantenne (111) positioniert ist, und um einen Satz vorbestimmter Übersprechabtastwerte vom zweiten Kanal zu erhalten, wenn die zweite Empfangsantenne (122) wiederholte transiente Signale aus dem Übersprechen zwischen der zweiten Sendeantenne (112) und der zweiten Empfangsantenne (122) empfängt, wenn sich kein Material vor der zweiten Sendeantenne (112) positioniert ist, wobei die Abtastung asynchron zur erzeugten elektromagnetischen Welle erfolgt.

10. Ein Verfahren (200) nach Anspruch 9, wobei der Verarbeitungsschritt (240) das Berechnen von Hüllkurven der wiederholten transienten Signale in den erhaltenen Abtastwerten und das Ausrichten dieser Hüllkurven zur Kalibrierung des Timings der wiederholten transienten Signale in den erhaltenen Abtastwerten umfasst.

11. Ein Verfahren (200) nach einem der Ansprüche 8 bis 10, wobei der Verarbeitungsschritt (240) das Entfernen von Ausreißern aus den erhaltenen Abtastwerten umfasst.

12. Ein Verfahren (200) nach einem der Ansprüche 8 oder 11, wobei die Verarbeitung (240) das Ableiten geometrischer Informationen und/oder elektromagnetischer Eigenschaften einer oder mehrerer Schichten des Prüfmaterials aus den synchronen Datenabtastwerten der wiederholten transienten Signale aus der Reflexion der elektromagnetischen Welle am Prüfmaterial umfasst.

13. Ein Verfahren (200) nach Anspruch 12, wobei das Ableiten die Dekonvolution der Datenabtastwerte in verschiedene Beiträge zum reflektierten Teil der elektromagnetischen Welle umfasst, die aus der Reflexion der elektromagnetischen Welle an oder der Transmission durch eine oder mehrere Grenzflächen der schichtbasierten Struktur resultieren, basierend auf einem Superpositionsmodell der verschiedenen Beiträge im transienten Teil der reflektierten elektromagnetischen Welle.

14. Ein Computerprogrammprodukt zur zerstörungsfreien Analyse eines Prüfmaterials, wenn auf einem Prozessor ausgeführt, wobei das Computerprogrammprodukt programmiert ist, zum:

   - Empfangen eines Satzes von Referenzabtastwerten und eines Satzes von Datenabtastwerten von einem Differenzmessmodul, das für die wiederholte äquivalente Zeitabtastung von transienten Signalen von einer ersten Empfangsantenne (121) unter Verwendung eines ersten Taktsignals und für die wiederholte äquivalente Zeitabtastung von transienten Signalen von einer zweiten Empfangsantenne (122) unter Verwendung eines zweiten Taktsignals konfiguriert ist, wobei das erste und das zweite Taktsignal korreliert sind, um den Satz von Referenzabtastwerten von einem ersten Kanal zu erhalten, wenn die erste Empfangsantenne (121) wiederholte transiente Signale aus der Reflexion einer wiederholten erzeugten transienten elektromagnetischen Welle an einem ersten Referenzmaterial empfängt, das vor einer ersten Sendeantenne (111) positioniert ist, und um die Datenabtastwerte von einem zweiten Kanal zu erhalten, wenn die zweite Empfangsantenne (122) wiederholte transiente Signale aus der Reflexion der elektromagnetischen Welle am Prüfmaterial empfängt, wenn sich das Prüfmaterial vor der zweiten Sendeantenne (112) positioniert ist, wobei die Abtastung asynchron zur erzeugten elektromagnetischen Welle erfolgt,
   - das Computerprogrammprodukt ferner programmiert ist, zum Ermitteln von Phaseninformationen aus dem Satz von Referenzabtastwerten des ersten Kanals unter Verwendung vorbestimmter Betriebsdaten des Systems, und zum Umwandeln die Datenabtastwerte unter Verwendung der Phaseninformationen des Satzes von Referenzabtastwerten des ersten Kanals und unter Verwendung der vorbestimmten Betriebsdaten des Systems in synchrone Datenabtastwerte, die Amplituden- und Phaseninformationen enthalten.

15. Ein Datenträger, umfassend ein darin codiertes Computerprogrammprodukt nach Anspruch 14.

**Revendications**

1. Un système (100) pour l'analyse non destructive d'un matériau de test, comprenant :

   - un générateur de signal électromagnétique (110) configuré pour générer de manière répétitive une onde électromagnétique d'une fréquence sensiblement unique dans laquelle l'onde électromagnétique comprend une partie transitoire, et pour émettre l'onde électromagnétique en utilisant une première antenne d'émission (111) dans un premier canal et en utilisant une deuxième antenne d'émission (112) dans un deuxième canal différent du premier canal,
   - un module de mesure différentielle (120) configuré pour l'échantillonnage temporel équivalent répétitif de signaux transitoires d'une première antenne de réception (121) en utilisant un premier signal d'horloge et l'échantillonnage temporel équivalent répétitif de signaux transitoires d'une deuxième antenne de réception (122) en utilisant un deuxième signal d'horloge, dans lequel le premier signal d'horloge et le deuxième signal d'horloge sont corrélés,
   - pour obtenir un ensemble d'échantillons de référence du premier canal lorsque la première antenne de réception (121) reçoit des signaux transitoires répétitifs de réflexion de l'onde électromagnétique sur un premier matériau de référence positionné devant la première antenne d'émission (111) et
   - pour obtenir des échantillons de données du deuxième canal lorsque la deuxième antenne de réception (122) reçoit des signaux transitoires répétitifs de réflexion de l'onde électromagnétique sur le matériau de test lorsque le matériau de test est positionné devant la deuxième antenne d'émission (112), dans lequel l'échantillonnage est asynchrone avec l'onde électromagnétique générée,
   - un module de traitement (130) configuré pour déterminer des informations de phase à partir de l'ensemble d'échantillons de référence du premier canal en utilisant des données opérationnelles prédéterminées du système et pour convertir les échantillons de données en échantillons de données synchrones comprenant des informations d'amplitude et de phase en utilisant les informations de phase de l'ensemble d'échantillons de référence du premier canal et en utilisant les données opérationnelles prédéterminées du système.

2. Un système (100) selon la revendication 1, dans lequel au moins une partie des données opérationnelles prédéterminées du système est obtenue par le module de mesure différentielle (120) en obtenant un premier ensemble d'échantillons de référence prédéterminés du premier canal lorsque la première antenne de réception (121) reçoit des signaux transitoires répétitifs de réflexion de l'onde électromagnétique sur le premier matériau de référence positionné devant la première antenne d'émission (111) en combinaison avec un deuxième ensemble d'échantillons de référence prédéterminés du deuxième canal lorsque la deuxième antenne de réception (122) reçoit des signaux transitoires répétitifs de réflexion de l'onde électromagnétique sur un deuxième matériau de référence lorsque le deuxième matériau de référence est positionné devant la deuxième antenne d'émission (112).

3. Un système (100) selon l'une quelconque des revendications précédentes dans lequel le premier matériau de référence ou le deuxième matériau de référence est un réflecteur idéal.

4. Un système (100) selon l'une quelconque des revendications précédentes, dans lequel au moins une partie des données opérationnelles prédéterminées du système est obtenue par le module de mesure différentielle (120) en obtenant un troisième ensemble d'échantillons de référence prédéterminés du premier canal lorsque la première antenne de réception (121) reçoit des signaux transitoires répétitifs de réflexion de l'onde électromagnétique sur le premier matériau de référence positionné devant la première antenne d'émission (111) en combinaison avec un ensemble d'échantillons de diaphonie prédéterminés du deuxième canal lorsque la deuxième antenne de réception (122) reçoit des signaux transitoires répétitifs de diaphonie entre la deuxième antenne d'émission (112) et la deuxième antenne de réception (122) lorsqu'aucun matériau n'est positionné devant la deuxième antenne d'émission (112).

5. Un système (100) selon l'une quelconque des revendications précédentes dans lequel le module de traitement (130) est configuré pour dériver, à partir des échantillons de données synchrones des signaux transitoires répétitifs de réflexion de l'onde électromagnétique sur le matériau de test, des informations géométriques et/ou des propriétés électromagnétiques d'une ou plusieurs couches du matériau de test.

6. Un système (100) selon l'une quelconque des revendications précédentes dans lequel l'onde électromagnétique a une fréquence comprise entre 0,1 GHz et 100 Thz.

7. Un système (100) selon l'une quelconque des revendications précédentes dans lequel le premier signal d'horloge est le même que le deuxième signal d'horloge.

8. Un procédé (200) pour l'analyse non destructive d'un matériau de test, le procédé (200) comprenant :

   - générer de manière répétitive (210) une onde électromagnétique d'une fréquence sensiblement unique dans laquelle l'onde électromagnétique comprend une partie transitoire, et pour émettre l'onde électromagnétique en utilisant une première antenne d'émission (111) dans un premier canal et en utilisant une deuxième antenne d'émission (112) dans un deuxième canal différent du premier canal,
   - l'échantillonnage temporel équivalent répétitif (230) de signaux transitoires d'une première antenne de réception (121) en utilisant un premier signal d'horloge et l'échantillonnage temporel équivalent répétitif de signaux transitoires d'une deuxième antenne de réception (122) en utilisant un deuxième signal d'horloge dans lequel le premier signal d'horloge et le deuxième signal d'horloge sont corrélés, pour obtenir un ensemble d'échantillons de référence du premier canal lorsque la première antenne de réception (121) reçoit des signaux transitoires répétitifs de réflexion de l'onde électromagnétique sur un premier matériau de référence positionné devant la première antenne d'émission (111) et pour obtenir des échantillons de données du deuxième canal lorsque la deuxième antenne de réception (122) reçoit des signaux transitoires répétitifs de réflexion de l'onde électromagnétique sur le matériau de test lorsque le matériau de test est positionné devant la deuxième antenne d'émission (112), dans lequel l'échantillonnage est asynchrone avec l'onde électromagnétique générée,
   - traiter (240) l'ensemble d'échantillons de référence et les échantillons de données pour déterminer des informations de phase à partir de l'ensemble d'échantillons de référence du premier canal en utilisant des données opérationnelles prédéterminées du système et pour convertir les échantillons de données en échantillons de données synchrones comprenant des informations d'amplitude et de phase en utilisant les informations de phase de l'ensemble d'échantillons de référence du premier canal et en utilisant les données opérationnelles prédéterminées du système.

9. Un procédé (200) selon la revendication 8, le procédé comprenant une étape de pré-opération (220), dans laquelle l'étape de pré-opération comprend :

- obtenir au moins une partie des données opérationnelles prédéterminées du système par l'échantillonnage temporel équivalent répétitif (221) de signaux de la première antenne de réception (121) en utilisant le premier signal d'horloge et de la deuxième antenne de réception (122) en utilisant le deuxième signal d'horloge, pour obtenir un premier ensemble d'échantillons de référence prédéterminés du premier canal lorsque la première antenne de réception (121) reçoit des signaux transitoires répétitifs de réflexion de l'onde électromagnétique sur le premier matériau de référence positionné devant la première antenne d'émission (111) et pour obtenir un deuxième ensemble d'échantillons de référence prédéterminés du deuxième canal lorsque la deuxième antenne de réception (122) reçoit des signaux transitoires répétitifs de réflexion de l'onde électromagnétique sur un deuxième matériau de référence lorsque le deuxième matériau de référence est positionné devant la deuxième antenne d'émission (112), dans lequel l'échantillonnage est asynchrone avec l'onde électromagnétique générée,

et/ou dans lequel l'étape de calibration comprend :

- obtenir au moins une partie des données opérationnelles prédéterminées du système par l'échantillonnage temporel équivalent répétitif (223) de signaux de la première antenne de réception (121) en utilisant le premier signal d'horloge et par l'échantillonnage temporel équivalent répétitif de signaux de la deuxième antenne de réception (122) en utilisant le deuxième signal d'horloge, pour obtenir un troisième ensemble d'échantillons de référence prédéterminés du premier canal lorsque la première antenne de réception (121) reçoit des signaux transitoires répétitifs de réflexion de l'onde électromagnétique sur le premier matériau de référence positionné devant la première antenne d'émission (111) et pour obtenir un ensemble d'échantillons de diaphonie prédéterminés du deuxième canal lorsque la deuxième antenne de réception (122) reçoit des signaux transitoires répétitifs de diaphonie entre la deuxième antenne d'émission (112) et la deuxième antenne de réception (122) lorsqu'aucun matériau n'est positionné devant la deuxième antenne d'émission (112), dans lequel l'échantillonnage est asynchrone avec l'onde électromagnétique générée.

10. Un procédé (200) selon la revendication 9 dans lequel l'étape de traitement (240) comprend le calcul des enveloppes des signaux transitoires répétitifs dans les échantillons obtenus et l'alignement de ces enveloppes pour calibrer le timing des signaux transitoires répétitifs dans les échantillons obtenus.

11. Un procédé (200) selon l'une quelconque des revendications 8 à 10 dans lequel l'étape de traitement (240) comprend la suppression des valeurs aberrantes des échantillons obtenus.

12. Un procédé (200) selon l'une quelconque des revendications 8 ou 11 dans lequel le traitement (240) comprend la dérivation à partir des échantillons de données synchrones des signaux transitoires répétitifs de réflexion de l'onde électromagnétique sur le matériau de test des informations géométriques et/ou des propriétés électromagnétiques d'une ou plusieurs couches du matériau de test.

13. Un procédé (200) selon la revendication 12 dans lequel la dérivation comprend la déconvolution des échantillons de données en différentes contributions à la partie réfléchie de l'onde électromagnétique provenant de la réflexion de l'onde électromagnétique sur, ou de la transmission à travers, une ou plusieurs interfaces de la structure en couches, basée sur un modèle de superposition des différentes contributions dans la partie transitoire de l'onde électromagnétique réfléchie.

14. Un produit de programme informatique pour, lorsqu'il est exécuté sur un processeur, l'analyse non destructive d'un matériau de test, ledit produit de programme informatique étant programmé pour

- recevoir un ensemble d'échantillons de référence et un ensemble d'échantillons de données d'un module de mesure différentielle qui est configuré pour l'échantillonnage temporel équivalent répétitif de signaux transitoires d'une première antenne de réception (121) en utilisant un premier signal d'horloge et l'échantillonnage temporel équivalent répétitif de signaux transitoires d'une deuxième antenne de réception (122) en utilisant un deuxième signal d'horloge dans lequel le premier signal d'horloge et le deuxième signal d'horloge sont corrélés, pour obtenir l'ensemble d'échantillons de référence d'un premier canal lorsque la première antenne de réception (121) reçoit des signaux transitoires répétitifs de réflexion d'une onde électromagnétique transitoire générée de manière répétitive sur un premier matériau de référence positionné devant une première antenne d'émission (111) et pour obtenir les échantillons de données d'un deuxième canal lorsque la deuxième antenne de réception (122) reçoit des signaux transitoires répétitifs de réflexion de l'onde électromagnétique sur le matériau de test lorsque le matériau de test est positionné devant la deuxième antenne d'émission (112), dans lequel l'échantillonnage est asynchrone avec l'onde électromagnétique générée,
- ledit produit de programme informatique étant en outre programmé pour déterminer des informations de phase à partir de l'ensemble d'échantillons de référence du premier canal en utilisant des données opérationnelles prédéterminées du système et pour convertir les échantillons de données en échantillons de données synchrones comprenant des informations d'amplitude et de phase en utilisant les informations de phase de l'ensemble d'échantillons de référence du premier canal et en utilisant les données opérationnelles prédéterminées du système.

**15.** Un support de données comprenant un produit de programme informatique selon la revendication 14 encodé dessus.

FIG. 1 (prior art)

FIG. 2 (prior art)

**FIG. 3**

**FIG. 4**

**FIG. 5**

100

T

111 ⌐ Tx1

110 — Tx

121 ⌐ Rx1

112 ⌐ Tx2

120 —

Rx channel1

122 ⌐ Rx2

Rx channel2

131

132

Proc.

130 —

**FIG. 6**

210 — Gen.

Ref – Ref sampling 221

220

Ref – Air sampling 223

230 — Ref – Test sampling

240 — Processing

**FIG. 7**

**FIG. 8**

**FIG. 9**

**FIG. 10**

**FIG. 11**

**FIG. 12**

**FIG. 13**

**FIG. 14**

**FIG. 15**

**FIG. 16**

**FIG. 17**

**FIG. 18**

**FIG. 19**

FIG. 20

**REFERENCES CITED IN THE DESCRIPTION**

**Patent documents cited in the description**

- EP 3106861 A1

- EP 3311147 A1